# EUROPEAN PATENT SPECIFICATION

(11) **EP 3 968 074 B1**
(45) Date of publication and mention of the grant of the patent: **01.04.2026**
(21) Application number: 21815870.7
(22) Date of filing: 17.04.2021
(51) Int. Cl.: G02B 15/10, G03B 3/10, G03B 5/00, G03B 30/00, H04N 23/55, H04N 23/57, G03B 5/06

(54) **CAMERA APPARATUS**
KAMERAVORRICHTUNG
APPAREIL DE PRISE DE VUES

(30) Priority: 08.06.2020 CN 202010514146; 12.08.2020 CN 202010808880
(43) Date of publication of application: 16.03.2022
(73) Proprietor: HUAWEI TECHNOLOGIES CO., LTD., Shenzhen, Guangdong 518129 (CN)
(72) Inventor: LI, Can, Shenzhen, Guangdong 518129 (CN); CHEN, Yong, Shenzhen, Guangdong 518129 (CN); YUAN, Ting, Shenzhen, Guangdong 518129 (CN); LI, Fei, Shenzhen, Guangdong 518129 (CN); ZHANG, Shaopeng, Shenzhen, Guangdong 518129 (CN); LUO, Shuizhen, Shenzhen, Guangdong 518129 (CN)
(74) Representative: Isarpatent
(86) International application number: PCT/CN2021/087952
(87) International publication number: WO 2021/249024

(56) References cited:
- CN-A- 1 116 726
- CN-A- 105 301 770
- CN-A- 106 443 953
- CN-A- 111 201 466
- JP-A- 2003 270 532
- JP-A- 2005 301 110
- JP-A- S58 200 207
- US-A1- 2004 136 088
- US-A1- 2007 115 567
- US-A1- 2012 002 958

## Description

### TECHNICAL FIELD

This disclosure generally relates to the field of optical technologies, and the invention in particular relates to a camera apparatus.

### BACKGROUND

With the popularity of an HDCVI (high definition composite video interface, high definition composite video interface) technology in recent years and the development of an SDC (software defined camera, software defined camera) and an IPC (IP camera, Internet protocol camera), picture definition of a front-end camera has evolved from standard definition, high definition, and ultra-high definition to 4K high definition at present. A 12-megapixel image sensor has been widely applied to projects in important fields such as intelligent transportation and safe city. All types of camera apparatuses have zoom and wide angle requirements.

Currently, a horizontal zoom system solution is often used in the industry to implement switching of a lens focal length between a long focal length and a short focal length. Main implementation steps of the technology are as follows: Lenses are divided into a front group and a rear group, where the front group is a movable group, and a zoom effect is implemented by moving the group axially; and the rear group may be a fixed group or a focusing group, and light passes through the front group and the rear group and finally is clearly imaged on an image sensor. The technical solution implements switching of the lens focal length between a long focal length and a short focal length. In other words, the horizontal movable lens group solution can more easily implement functions of a long focal length and a wide angle on one lens.

However, a horizontal zoom system implements zoom by increasing an optical spacing between lens groups, which increases a total track length (TTL) of an optical system in a zoom process. This contradicts a concept of miniaturization of a whole machine.

JP 2005 301110 A relates to a variable magnification lens system. The variable magnification lens system is constituted by arraying, successively from an object side, a first lens group, a second lens group, a fixed optical member and an imaging lens system. The first lens group has negative refracting power. The second lens group has positive refracting power. The fixed optical member bends an optical path using the reflection from a prism etc. The first lens group, the optical member and the second lens group constitute an afocal system of <1 in angular magnification. The variable magnification lens system makes the first lens group and the second lens group simultaneously movable in a direction nearly orthogonal with their optical axes. The focal length of the entire system is changed by changing the positions of the first and second lens groups to a position where the optical axes are aligned to the optical axis of the imaging lens system. A position exists where the optical axis of the imaging lens system is retracted so as to deviate it from the optical path of the imaging lens system. The variable magnification lens system is adapted to change the focal length of the entire system.

US 2007/115567 A1 relates to a variable power optical system. The variable power optical system comprises a first optical part, a second optical part, and a third optical part. The first and third optical parts are used for refraction. The second optical part is used for reflection or transmission. The first optical part is movable with respect to the second and third optical parts to change the focal length of the entire system. The second or the third optical parts have a guide which is in contact partly with the first optical part in such a way as to restrict its moving direction. The first optical part is movably held between the second and third optical parts. This structure eliminates the necessity of separately forming the guide to move the first optical part. The guide is formed from a synthetic resin integrally with the stationary optical part.

JP 2003 270532 A relates to an optical member that emits a light beam incident from the object side to the image side. A movable lens is arranged on the object side with respect to the optical member. A reflecting surface is provided on the optical member and formed of a free curved surface. The movable lens is movable between the inside and outside of the optical path. The angle formed by the optical axis on the object side and the optical axis on the image side is 45 degrees or more and 135 degrees or less.

JP S58 200207 A relates to a changing method of angle of view of a zoom lens. An attachment lens consists of a negative lens and a positive lens. The negative and positive lenses are inserted into the movement space of
the moving lens group in a zoom lens. The zoom lens consists of a variator and a compensator. The zoom lens is preliminarily set in the zoom position in the wide-angle end. The attachment lens is inserted into the movement space of a moving lens group, and the zoom position in the wide-angle end is changed to the wide-angle side. The attachment lens consists of two lens groups with negative and positive refractive powers to change the angle of view without degrading the optical capacity essential to the zoom lens.

CN 1 116 726 A relates to a lens control device comprising a variator lens and a compensation lens. The compensation lens compensates for the displacement of the focal plane associated with the movement of the variator lens. A conversion lens is disposed in an optical path in a detachable manner. The conversion lens is adapted to limit the area of the movement of the variator lens. Here, a correction means modifying the area of the movement of the compensation lens in response to the mounting of the conversion lens.

Therefore, how to implement zoom and a wide angle of a camera apparatus while ensuring miniaturization of a whole machine is a direction of research and development in the industry.

### SUMMARY

The object of the invention is to provide a camera apparatus including a zoom lens group and a lens assembly, so that a drive element drives the zoom lens group to cut into or move out of an optical path on an object side of an imaging lens group, to implement zoom, enlarge a field of view, and implement a wide-angle function. This object is solved by the attached independent claims, and further embodiments and improvements of the invention are listed in the attached dependent claims.

According to a first aspect according to the invention, the invention provides a camera apparatus according to claim 1.

In this disclosure, the zoom lens group is disposed on the object side of the imaging lens group, and the drive element drives the optical element to move along the first direction to cut into or move out of the optical path, to implement zoom. Because the first direction is set at an included angle with the optical axis, in this application, zoom is implemented by cutting the lens group into or moving the lens group out of the optical path instead of moving the lens group along the direction of the optical axis. In this application, a lateral space (namely, a space perpendicular to the direction of the optical axis) is used relative to the optical axis in a manner of moving the optical element along the first direction, and the optical element does not need to be moved along the direction of the optical axis. Therefore, a shorter total track length of the optical system can be obtained. When the camera apparatus is mounted inside an electronic device, a size of the camera apparatus in the direction of the optical axis is controlled because the total track length of the optical system is controlled to be short. In addition, in the electronic device, there may be an idle space in a peripheral space of a position at which the camera apparatus is mounted. To prevent mutual interference between electronic elements, other electronic components are not arranged in this space, and the zoom lens group provided in this application can be arranged by using the idle space at the periphery of the camera apparatus in the electronic device effectively. Therefore, the zoom lens group provided in this application is small, which facilitates miniaturization of the electronic device. In addition, the zoom lens group is located on the object side of the imaging lens group, so that the field of view of the imaging lens group can be enlarged.

In this disclosure, a focal power of the optical element of the zoom lens group is properly allocated, so that in a process of the optical element cutting into or moving out of the optical path, imaging of a wide-angle area is implemented. The focal power of the optical element of the zoom lens group is negative because the optical element has a function of collecting large-angle light only when the focal power is negative, and the field of view can be enlarged. As a zoom group, the zoom lens group can change the field of view of the imaging lens group. In a possible implementation, the lens group of the optical element includes at least one lens, and a quantity of lenses is not limited, and may be one, two, three, or more. In a possible implementation, one lens close to the object side is a first lens, and the first lens may have a negative focal power, so that when the zoom lens group cuts into the optical path, a field of view of the camera apparatus can be enlarged.

In a not-claimed possible implementation, the optical element includes a first lens and a second lens that are successively arranged along the optical axis. An object-side surface of the first lens is a convex surface near the optical axis, an image-side surface of the first lens is a concave surface near the optical axis, and a focal power of the first lens is negative. An object-side surface and an image-side surface of the second lens are both concave surfaces near the optical axis, and a focal power of the second lens is negative. After being combined, the first lens and the second lens are placed on the object side of the imaging lens group, so that a focal length can be adjusted and a field of view can be enlarged. A focal power of the optical element provided in this implementation is negative.

In a not-claimed possible implementation, the optical element includes a first lens, a second lens, and a third lens that are successively arranged along the optical axis, and the first lens is the 1^{st} lens of the optical element that is close to the object side. An object-side surface of the first lens is a concave surface near the optical axis, an image-side surface of the first lens is a concave surface near the optical axis, and a focal power of the first lens is negative. An object-side surface of the second lens is a convex surface near the optical axis, an image-side surface of the second lens is a concave surface near the optical axis, and a focal power of the second lens is positive. An object-side surface of the third lens is a convex surface near the optical axis, an image-side surface of the third lens is a convex surface near the optical axis, and a focal power of the third lens is positive. After being combined, the first lens, the second lens, and the third lens are placed on the object side of the imaging lens group, so that a focal length can be adjusted and a field of view can be enlarged. A focal power of the optical element provided in this implementation is negative.

In a not-claimed possible implementation, the optical element includes only one lens, and a focal power of the lens is negative. Specifically, a radius range R1 of an object-side surface of the lens meets |R1| > 100 mm, and a radius range R2 of an image-side surface of the lens meets -35 mm < R2 < -15 mm.

In a possible implementation, that the first direction is perpendicular to the optical axis may be understood as a state in which the first direction and the optical axis are nearly perpendicular, including an ideal state in which an included angle is absolutely 90 degrees, or including an angle range in which an included angle fluctuates around 90 degrees, for example, between 80 and 100 degrees.

A definition of "perpendicular" in a perpendicular relationship between two features described in all implementations of this application may be understood as a nearly perpendicular state, for example, an included angle between an object-side surface of a first optical element and an optical axis is within an allowed tolerance range in which the included angle fluctuates around 90 degrees, for example, 85 to 95 degrees. This tolerance may be understood as an assembly tolerance, a tolerance of flatness formed in a process of processing an optical element, or the like. (This description is applicable to other embodiments below, and is not repeated in subsequent implementations.)

According to the invention, the zoom lens group includes a housing, the optical element is accommodated inside the housing, and the housing is connected to the imaging lens group. A specific connection manner may be a detachable connection or a fixed connection.

In a possible implementation, an accommodation space is enclosed in the housing of the zoom lens group, the optical element is accommodated in the accommodation space, the housing is provided with a first opening and a second opening that are opposite to each other, and the drive element drives the optical element to move in the accommodation space. When the optical element moves to a position between the first opening and the second opening, the optical element cuts into the optical path, and the lens group is located between the first opening and the imaging lens group. Specifically, the housing includes a housing body and a cover plate, the housing body includes a bottom wall and a side wall that are jointly enclosed to form the accommodation space, the bottom wall is connected to one end of the side wall, the other end of the side wall is an opening, the optical element and the drive element may be mounted inside the housing body from the opening position, and the cover plate is connected to the other end of the side wall. The second opening is located on the bottom wall of the housing body and the first opening is located on the cover plate.

The first opening and the second opening are opposite to each other, and a connection line between a center of the first opening and a center of the second opening is collinear with an optical axis of the imaging lens group. A size of the first opening may be greater than a size of the second opening. Because the zoom lens group has a function of enlarging a field of view, the size of the first opening is set to be greater than the size of the second opening, which helps match a large field of view. Certainly, the first opening and the second opening may have a same shape and size. A transparent protective sheet (for example, protective glass) may be disposed at the first opening.

In a possible implementation, a part of the imaging lens group extends into the housing, so that light directly enters the imaging lens group in the housing. Specifically, the second opening is used for a part of the imaging lens group to pass through and extend into the accommodation space, and the housing is connected to a lens barrel of the imaging lens group, so that light emergent from the optical element enters the imaging lens group in the accommodation space.

In a possible implementation, the imaging lens group includes a lens group and a lens barrel, a fixing plate is protruded at a periphery of the lens barrel of the imaging lens group, the fixing plate is annular, and the lens barrel of the imaging lens group is distributed on two sides of the fixing plate. A fixing portion is protruded on an outer surface of the housing of the zoom lens group, the fixing portion is annular and surrounds the second opening, a part of the lens barrel of the imaging lens group extends into the housing of the zoom lens group from the second opening, and an outer edge of the fixing plate overlaps the fixing portion and is connected to the fixing portion in a sealing manner. Specifically, the connection may be sealed by glue fixing.

In this application, the optical element and the drive element of the zoom lens group are assembled to the housing, so that the zoom lens group becomes a modularized overall structure, and the zoom lens group can be decoupled from the imaging lens group or the optical system. In other words, the zoom lens group can be separated to be an independent apparatus. In this way, the apparatus is easy to operate in design and assembly aspects. The zoom lens group is mounted in the optical system, for example, a camera, and only the housing needs to be positioned to ensure a position relationship between the optical axis and the connection line between the center of the first opening and the center of the second opening, to ensure assembly precision. In addition, the separated zoom lens group can be matched with different types of imaging lens groups, so that the zoom lens group is widely applied.

The housing may be fixedly connected to the imaging lens group to jointly form a fixed optical structure. This solution is applicable to a fixed-focus camera. The housing and the imaging lens group may be alternatively connected in an unfixed manner, for example, may slide relatively or rotate relatively, and there is a degree of freedom between the housing and the imaging lens group. This solution is applicable to a continuous-zoom camera.

According to the invention, the drive element includes a motor, a screw rod, and a fitting member, the motor drives the screw rod to rotate, the fitting member is threadedly fitted with the screw rod, the fitting member is fixedly connected to the lens barrel, and the screw rod is rotatably connected to the housing and extends along the first direction in the accommodation space. In this implementation, the motor drives the screw rod to rotate and the screw rod is threadedly fitted with the fitting member, so that the rotation of the screw rod is converted into movement of the fitting member. A fitting structure only needs to be threadedly fitted, occupies a relatively small space, and is easy to assemble, so that mounting precision is easily ensured. This helps improve position precision of the optical element, and improve optical performance of the zoom lens group.

In a possible implementation, the fitting member includes a body provided with a threaded through hole and a connection portion located at an edge position of the body, the screw rod passes through the threaded through hole, an outer surface of the lens barrel is provided with a groove, and the connection portion is fitted with the groove, so that the lens barrel is connected to the fitting member. The structure of the threaded through hole fitted with the screw rod can ensure that the fitting member slides on the screw rod in a balanced manner. In an assembly process, the fitting member and the screw rod are first assembled as a whole, and then the connection portion of the fitting member is inserted into the groove on the lens barrel. The fit between the connection portion and the groove may be a tight fit, which may be understood as an interference fit. A fixed connection between the connection portion and the lens barrel is implemented by using a friction force between the connection portion and the lens barrel.

In another possible implementation, due to a tolerance in a design or assembly process, a gap may exist between the connection portion and the groove, the existence of the gap causes an unstable connection between the connection portion and the lens barrel, and shake occurs in a movement process. This gap may be fixed by glue filling. The gap problem may be alternatively resolved in another manner, for example, an elastic connection, which is specifically: A connection structure between the connection portion and the lens barrel in the groove may be set as an elastic connection structure, for example, a spring plate is disposed at a periphery of the connection portion. The connection portion abuts against an inner wall of the groove by using the spring plate, and the elastic connection structure can ensure a reliable connection between the connection portion and the lens barrel, thereby preventing loosening in a movement process and preventing the lens barrel from shaking.

According to the invention, the motor is located outside the housing, and one end of the screw rod extends out of the housing to connect to the motor. In this application, the motor is placed outside the housing, so that wiring of the motor is facilitated because the motor needs to be electrically connected to a drive circuit and a power supply circuit. If the motor is disposed in the housing, an electrical connection line needs to extend into the housing, which leads to complex wiring. Consequently, a structure of the housing is also complex, and a wiring hole needs to be reserved. In addition, the motor heats up in an operation process, and the optical element expands when heated, which affects optical performance. Placing the motor outside the housing can isolate the heat of the motor, so that the optical element is protected from deformation or other performance changes caused by the heat of the motor.

In a not-claimed possible implementation, the drive element may be assembled into an integral structure, and then mounted to the outer surface of the housing. The housing is provided with a strip-shaped through groove, and an extension direction of the through groove is the first direction, namely, a direction in which the screw rod extends. A partial structure fitted with the connection portion of the drive element is disposed on the lens barrel of the zoom lens group and extends out of the housing from the through groove position. In another implementation, the connection portion of the drive element may alternatively extend into the housing from the through groove and fit with the groove on the lens barrel.

The motor also vibrates in the operation process. In a possible implementation, a cushioning member may be disposed in a space outside the housing to absorb vibration of the motor. The cushioning member is disposed outside the housing and does not affect a spatial layout in the housing, thereby facilitating a miniaturization design of the zoom lens group. In addition, after the vibration of the motor is absorbed by the cushioning member, a stable state of the housing is ensured, so that the optical element is protected from the vibration, optical performance of the optical element is ensured, and an imaging effect is improved. Therefore, the motor is disposed outside the housing, so that the heat and vibration generated during the operation process of the motor can be prevented from affecting imaging of the optical element.

In a possible implementation, the cushioning member is matched with a heat dissipation structure to be jointly disposed at a periphery of the motor, and the heat dissipation structure is used to assist in heat dissipation of the motor. The heat dissipation structure may be a metal heat conduction structure or a graphene heat dissipation material.

In a possible implementation, a guide rod is disposed in the housing, the lens barrel is slidably connected to the guide rod, and an extension direction of the guide rod is the first direction. In this application, the guide rod and the screw rod jointly form a movement track of the optical element, so that smooth movement of the optical element can be ensured. The guide rod is a smooth cylindrical rod, and there may be two guide rods opposite to each other and respectively located on two sides of the optical element. The two guide rods and the screw rod form a triangular structure to improve stability of an assembly position of the optical element.

In a possible implementation, the optical element is limited in a state of cutting into the optical path and/or in a state of moving out of the optical path through a limiting fit between the optical element and the housing. Specifically, the housing includes a first limiting wall and a second limiting wall that are opposite to each other, and two ends of the guide rod are respectively fixed to the first limiting wall and the second limiting wall. The zoom lens group further includes a limiting slider, the limiting slider is slidably connected to the guide rod, and the limiting slider is fixedly connected to the lens barrel. When the limiting slider abuts against the first limiting wall, the optical element cuts into the optical path, and when the limiting slider abuts against the second limiting wall, the optical element moves out of the optical path. To sum up, in this implementation, movement of the optical element is limited by a limiting structure (a fitting structure of the first limiting wall, the second limiting wall, and the limiting slider). In this implementation, the movement of the optical element is implemented by fitting of the limiting slider and the guide rod, and a movement position of the optical element is determined by the limiting slider abutting against the first limiting wall and the second limiting wall. When the limiting slider abuts against the first limiting wall, the optical element cuts into the optical path. In this case, a control unit may collect a position of the optical element and send a signal to a drive circuit. The drive circuit may send an instruction to the motor, so that the motor stops operating, and the control unit may record a position state of the optical element. When the limiting slider abuts against the second limiting wall, the optical element moves out of the optical path. Similarly, the control unit may collect position information of the optical element, and the drive circuit may send an instruction to the motor, so that the motor stops operating.

In a not-claimed possible implementation, a cushioning pad, such as a silicone pad, may be disposed on surfaces on which the first limiting wall and the second limiting wall are in contact with the limiting slider. The cushioning pad may be fixed on surfaces of the first limiting wall and the second limiting wall, or may be fixed on a surface of the limiting slider. When the limiting slider abuts against the first limiting wall and the second limiting wall, the cushioning pad absorbs an inertial force of movement of the limiting slider due to the existence of the cushioning pad, and when the motor stops operating, the limiting slider stops moving. Because the inertial force is absorbed, the limiting slider stably stops at the first limiting wall and the second limiting wall, and does not spring back by the inertial force. It may be understood that the housing and the limiting slider are both made of rigid materials, and the cushioning pad disposed on surfaces of the housing and the limiting slider may be fixed by glue bonding, or the cushioning pad may be directly made on the surfaces of the first limiting wall and the second limiting wall or the surface of the limiting slider by using an integral molding process.

In a possible implementation, the zoom lens group further includes a position detection unit, the position detection unit is electrically connected to the drive circuit, the position detection unit is triggered in a process of the drive element driving the optical element to move along the first direction, and the position detection unit sends a signal to the drive circuit. The drive circuit is configured to drive the drive element based on the signal sent by the position detection unit, to move the optical element by a preset distance. The position detection unit may be an optical coupling apparatus, for example, an optical switch. The position detection unit is fixed inside the housing and is located on a movement path of the optical element. When the optical element moves to the position detection unit, the position detection unit detects the optical element, so that the position detection unit can be triggered to generate a position signal and send the position signal to the drive circuit.

In this disclosure, precise positioning of the optical element can be implemented by using the position detection unit in combination with the limiting structure.

According to a not-claimed second aspect, this application provides a lens assembly, including an imaging lens group and the zoom lens group provided in any possible implementation of the first aspect. The zoom lens group is located on an object side of the imaging lens group. In the lens assembly provided by this application, the imaging lens group may perform imaging independently, the zoom lens group is disposed on the object side of the imaging lens group, and after cutting in, the zoom lens group may perform imaging together with the imaging lens group, so that imaging of the imaging lens group can be zoomed, and a field of view can be enlarged.

In a not-claimed possible implementation, the imaging lens group is a fixed-focus lens group, a zoom lens group, or a focusing lens group. An optical axis of the imaging lens group is consistent with an optical axis of a camera apparatus (or an optical axis of an optical system in which the imaging lens group is located), and focusing can be performed along the optical axis.

In a not-claimed possible implementation, the zoom lens group is detachably connected to the imaging lens group. The detachable connection structure can decouple the zoom lens group from the imaging lens group. In other words, the zoom lens group can be matched with a plurality of different imaging lens groups.

In a not-claimed possible implementation, the lens assembly further includes a base configured to fix the imaging lens group, the base includes a fixing cylinder and a positioning post, the fixing cylinder is configured to accommodate one end of the imaging lens group that is away from the zoom lens group, the positioning post is located at a periphery of the fixing cylinder, and the positioning post is configured to connect to the zoom lens group.

Specifically, a housing of the zoom lens group includes an image-side surface, and the image-side surface faces the imaging lens group and is provided with a second opening. A fixing rod is disposed on the image-side surface of the housing, an extension direction of the fixing rod may be perpendicular to the image-side surface of the housing, the fixing rod is located at a periphery of the second opening, and the fixing rod is configured to connect to the base for mounting the imaging lens group.

A first space and a second space that are in communication are arranged in parallel along the first direction in the housing. When the optical element is in the first space, the optical element is located between the first opening and the second opening, and when the optical element is in the second space, the optical element moves out of the optical path. The fixing rod is located between the first space and the second space, or the fixing rod is located in the second space and at a position adjacent to the first space. The position of the fixing rod can ensure balance and stability of assembly of the zoom lens group.

In a not-claimed possible implementation, an infrared cut-off filter is disposed in the base, and the infrared cut-off filter is located on an image side of the imaging lens group.

The infrared cut-off filter includes an IR (infrared reflection) filter and an AR (anti-reflection, high-transmittance anti-reflection) filter, and the infrared cut-off filter can implement switching between the IR filter and the AR filter, to enable the imaging assembly to adapt to different application scenarios, and improve a photographing effect of the camera apparatus. When ambient light illumination is relatively strong (for example, the camera apparatus is used in daytime), a function of the IR filter in the infrared cut-off filter is used, and the IR filter can filter out infrared light to ensure imaging quality. When the ambient light illumination is relatively weak (for example, the camera apparatus is used at night), the infrared cut-off filter automatically switches to an infrared light compensation function, to use a function of the AR filter in the infrared cut-off filter, so that the AR filter can compensate for the relatively weak ambient light illumination by transmitting infrared light (an electronic device starts an infrared lamp to generate infrared light). Specifically, a photosensitive device configured in the camera apparatus senses a change of ambient light, the photosensitive device transmits a signal of ambient light illumination to a control chip, and the control chip transmits the signal to a drive element to start operation of the drive element, so as to drive the infrared cut-off filter to switch the AR filter and the IR filter.

In a not-claimed possible implementation, a reflection element is disposed on an optical path between the zoom lens group and the imaging lens group, the reflection element can rotate by a preset angle, and the preset angle may be understood as an angle specified based on a requirement of a specific photographing scene. The reflection element is configured to reflect incident light by an angle to enter the imaging lens group. The image sensor is located on an image side of the imaging lens group. Specifically, the image sensor is disposed on a circuit board, and the circuit board is fixed to a base. In this way, the base is connected to the circuit board, and an imaging assembly is mounted. In addition, a zoom lens group is also connected to the base, so that optical parts of the camera apparatus form a whole, which is easy to assemble, and positioning precision can be well controlled. In addition, an optical path directly enters a lens barrel of the imaging lens group inside a housing of the zoom lens group, and then enters the image sensor through the base. The optical path is isolated from outside, so that better sealing can be implemented, impurities such as dust can be prevented from entering the optical path, and imaging quality can be improved.

According to a not-claimed fourth aspect, this application provides an electronic device, including a control unit and the camera apparatus provided in the third aspect. The control unit is electrically connected to the image sensor, and is configured to obtain image data from the camera apparatus and process the image data.

In a not-claimed possible implementation, the electronic device is a smart screen used for a video conference. When an optical element in a zoom lens group cuts into an optical path, because the zoom lens group has functions of performing zoom and enlarging a field of view, combination of the zoom lens group and an imaging lens group can enable the camera apparatus to collect a panoramic view in a conference room, thereby implementing panoramic viewing. When the optical element moves out of the optical path, the imaging lens group performs photographing. The imaging lens group may be alternatively combined with another optical element. For example, the imaging lens group is combined with a reflector, and the reflector may rotate. In this way, the reflector can be separately positioned to a participant, to implement a close-up photographing effect.

In a not-claimed possible implementation, the electronic device is a mobile terminal. When an optical element in a zoom lens group cuts into an optical path, because the zoom lens group has functions of performing zoom and enlarging a field of view, combination of the zoom lens group and an imaging lens group can enable the camera apparatus to collect a wider photographing range, for example, when photographing a scene that requires a wide angle, such as a building or a bridge. When the optical element moves out of the optical path, the imaging lens group performs photographing, such as photographing a portrait.

In a not-claimed possible implementation, the electronic device is a surveillance camera. When an optical element in a zoom lens group cuts into an optical path, because the zoom lens group has functions of performing zoom and enlarging a field of view, combination of the zoom lens group and an imaging lens group enables the camera apparatus to collect a wider surveillance range without a need for a combination of a plurality of small-angle surveillance cameras. When the optical element moves out of the optical path, the imaging lens group performs photographing and distinguishes specific details of a photographed object, for example, information such as a face or a license plate.

In a not-claimed possible implementation, the electronic device further includes an image transmission unit. The image transmission unit is configured to transmit the image data to a display unit. Specifically, the image transmission unit may perform wired transmission or wireless transmission, and the display unit may be a display of the electronic device, for example, a display of a smart screen. The display unit may be alternatively another display device independent of the electronic device. For example, when the electronic device is a surveillance camera, an image may be transmitted to a remote display in a wireless transmission manner.

According to a not-claimed fifth aspect, this application provides a zoom method, applied to a camera apparatus. The camera apparatus includes a zoom lens group, an imaging lens group, and an image sensor that are successively arranged along a direction of an optical axis. The zoom lens group includes an optical element and a drive element. The optical element includes a lens barrel and a lens group assembled in the lens barrel, and the drive element is connected to the lens barrel. The zoom method includes:
receiving an instruction of a field of view adjustment requirement; and
starting the drive element based on the instruction, to enable the drive element to drive the optical element to move along a first direction, so that the optical element cuts into or moves out of an optical path to adjust a field of view, where the first direction is set at an included angle with the optical axis.

Specifically, when the instruction of a field of view adjustment requirement is to enlarge a field of view, the drive element drives the optical element to cut into the optical path. When the instruction of a field of view adjustment requirement is to reduce a field of view, the drive element drives the optical element to move out of the optical path.

In a not-claimed possible implementation, a position detection unit is disposed in the camera apparatus, and the position detection unit detects a position of the optical element. When the optical element triggers the position detection unit in a movement process of the optical element, the position detection unit sends a signal to a drive circuit, and the drive circuit drives the drive element based on the signal sent by the position detection unit, to move the optical element by a preset distance.

### BRIEF DESCRIPTION OF DRAWINGS

In order to describe the technical solutions in the embodiments of this application more clearly, the following illustrates the accompanying drawings used for illustration in the embodiments of this application.
FIG. 1 is a schematic diagram of a camera apparatus according to a possible implementation of this application, where an optical element is in a state of cutting into an optical path;
FIG. 2 is a schematic diagram of a state in which an optical element in the camera apparatus shown in FIG. 1 moves out of an optical path;
FIG. 3 is an optical path diagram in a state in which an optical element moves out of an optical path in a camera apparatus according to a possible implementation of this application;
FIG. 4 is an optical path diagram in a state in which an optical element cuts into an optical path in a camera apparatus according to a possible implementation of this application;
FIG. 5 is a schematic diagram of a camera apparatus according to a possible implementation of this application, where an optical element is in a state of cutting into an optical path;
FIG. 6 is a schematic diagram of a state in which an optical element in the camera apparatus shown in FIG. 5 moves out of an optical path;
FIG. 7 is a schematic architectural diagram of a lens group of an optical element in a zoom lens group according to a possible implementation of this application;
FIG. 8 is a schematic architectural diagram of a lens group of an optical element in a zoom lens group according to a possible implementation of this application;
FIG. 9A is a schematic three-dimensional diagram of a zoom lens group in one direction after assembly according to an implementation of this application;
FIG. 9B is a schematic three-dimensional diagram of a zoom lens group in another direction after assembly according to an implementation of this application;
FIG. 10 is a cross-sectional view of a camera apparatus according to a possible implementation of this application;
FIG. 11 is a schematic three-dimensional diagram of a camera apparatus in one direction according to a possible implementation of this application;
FIG. 12 is a schematic three-dimensional diagram of a camera apparatus in another direction according to a possible implementation of this application;
FIG. 13 is a schematic three-dimensional exploded diagram of a camera apparatus according to a possible implementation of this application;
FIG. 14 is a schematic diagram of partial three-dimensional assembly of a zoom lens group according to a possible implementation of this application;
FIG. 15 is a cross-sectional view of a camera apparatus in one direction according to a possible implementation of this application;
FIG. 16 is a partial view of a cross-sectional view of a camera apparatus in one direction according to a possible implementation of this application;
FIG. 17 is a cross-sectional view of a camera apparatus in another direction according to a possible implementation of this application, where an optical element is in a state of cutting into an optical path;
FIG. 18 is a schematic diagram of a state in which the optical element in the cross-sectional view shown in FIG. 17 moves out of the optical path;
FIG. 19 is a partial view of a cross-sectional view of a camera apparatus in one direction according to a possible implementation of this application;
FIG. 20 is a cross-sectional view of a camera apparatus in one direction according to a possible implementation of this application, where an optical element is in a state of cutting into an optical path;
FIG. 21 is a schematic diagram of a state in which the optical element in the cross-sectional view shown in FIG. 20 moves out of the optical path;
FIG. 22 is a schematic diagram of a camera apparatus according to an implementation of this application, where a zoom lens group is in a state of moving out of an optical path;
FIG. 23 is a schematic diagram of a camera apparatus according to an implementation of this application, where a zoom lens group is in a state of cutting into an optical path;
FIG. 24 is a schematic diagram of an electronic device;
FIG. 25 is a schematic diagram of another electronic device; and
FIG. 26 is a schematic diagram of another electronic device.

### DESCRIPTION OF EMBODIMENTS

The following describes the embodiments of this application with reference to the accompanying drawings in the embodiments of this application.

For ease of understanding, the following first explains and describes English abbreviations and related technical terms involved in the embodiments of this application.

Resolution (resolution): indicates a resolution capability of a lens. A higher value indicates a stronger resolution capability and clearer imaging. There are 1 megapixel (1 megapixel, 1M for short), 2M, 4M, 6M, and 4K cameras on the market.

Zoom lens (zoom lens): is a camera lens whose focal length can be changed by changing a distance between lens groups within a specific range, to obtain different widths of field of views, different sizes of images, and different scene ranges. The lens usually includes a zoom group and a focus lens group.

Image sensor (sensor): is a semiconductor device that functions like a film, but converts a light signal into a charge signal. A tiny light-sensitive substance implanted on the sensor is referred to as a pixel (pixel). If one sensor includes more pixels, the sensor provides higher picture resolution.

Total track length (TTL, total track length): is a length between a frontmost surface of an optical lens and an image sensor.

Field of view (FOV): In an optical instrument, an included angle formed by a lens of the optical instrument as a vertex and two edges of a maximum range of the lens through which an object image of a to-be-measured target can pass is referred to as a field of view. A field of vision of the optical instrument depends on a size of the field of view. A larger field of view indicates a wider field of vision and a smaller optical power. Simply, a target object beyond this angle is not to be captured by the lens.

Focal power (focal power): is a difference between a convergence degree of an image space beam and a convergence degree of an object space beam, and represents a flexion ability of an optical system to an incident parallel beam. A focal power φ of a refractive spherical lens meets φ = (n' - n) x (1/r1 - 1/r2), where n' is a refractive index of the lens, and n is a refractive index of a medium in which the lens is located. Generally, the lens is in air, and n is 1. A larger value of φ indicates that a parallel beam is folded more greatly. When φ > 0, it is a positive refractive power, and flexion is convergent. When φ < 0, it is a negative refractive power, and flexion is divergent. When φ = 0, it is plane refraction, which is also referred to as no focal power. In this case, a parallel beam along an axis is still a parallel beam along an axis after being refracted, and no refractive phenomenon occurs.

Optical axis: is a ray of light that passes vertically through a center of a lens. The optical axis of the lens is a line that passes through the center of the lens. When light parallel to the optical axis enters a convex lens, in an ideal convex lens, all the light converges at one point behind the lens. This point at which all the light converges is a focal point.

Infrared cut-off filter (ICR): Switching of a filter determines whether an image sensor can receive infrared light. A switching time of the filter depends on intensity of visible light detected by a sensor on a camera.

Using a lens or a lens group as a boundary, one side on which a photographed object is located is an object side, and one side on which an image of the photographed object is located is an image side. A surface of the lens near the object side may be referred to as an object-side surface, and a surface of the lens near the image side may be referred to as an image-side surface.

Imaging surface: is a carrier surface that is located on image sides of all lenses in a zoom lens and that is of an image formed after light successively passes through the lenses in the zoom lens.

A definition of "perpendicular" in a perpendicular relationship between two features described in all implementations of this application may be understood as a nearly perpendicular state, for example, an included angle between an object-side surface of a first optical element and an optical axis is within an allowed tolerance range in which the included angle fluctuates around 90 degrees, for example, 80 to 100 degrees. This tolerance may be understood as an assembly tolerance, a tolerance of flatness formed in a process of processing an optical element, or the like.

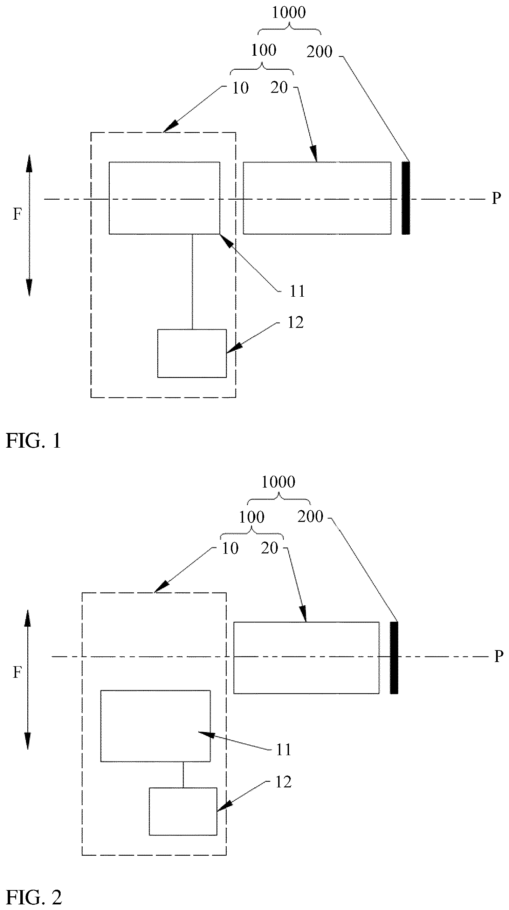

Referring to FIG. 1, this application provides a zoom lens group 10, applied to a camera apparatus 1000. The camera apparatus 1000 includes a lens assembly 100 and an image sensor 200, the lens assembly 100 includes a zoom lens group 10 and an imaging lens group 20, and the zoom lens group 10 is located on an object side of the imaging lens group 20 and configured to implement zoom of an optical system and enlarge a field of view. As shown in FIG. 1, the zoom lens group 10, the imaging lens group 20, and the image sensor 200 are successively arranged along an extension direction of an optical axis P, a position of the image sensor 200 is on an imaging surface of the optical system, and a target object (a to-be-photographed object) is located on one side of the zoom lens group 10 that is away from the image sensor 200. The imaging lens group 20 is a fixed-focus lens group, a zoom lens group, or a focusing lens group. FIG. 1 merely schematically shows a position relationship between the zoom lens group 10, the imaging lens group 20, and the image sensor 200. It may be understood that the camera apparatus 1000 may further include another optical element, for example, a filter, a rotating reflection element for changing an optical path direction, or a stop. The another optical element may be disposed between the imaging lens group 20 and the image sensor 200, for example, a filter may be disposed between the imaging lens group 20 and the image sensor 200. The another optical element may be alternatively disposed between the imaging lens group 20 and the zoom lens group 10, for example, a rotating reflection element for changing an optical path direction is disposed between the imaging lens group 20 and the zoom lens group 10. The another optical element may be alternatively disposed on an object side of the zoom lens group 10, for example, a stop is disposed on the object side of the zoom lens group 10.

An optical axis of the imaging lens group 20 and an optical axis of the camera apparatus 1000 (or an optical axis of an optical system in which the imaging lens group is located) are consistent and are both located on the optical axis P, and the imaging lens group 20 can perform focusing along the optical axis P, or the imaging lens group 20 can be adjusted by rotation, to implement stabilization.

The zoom lens group 10 includes an optical element 11 and a drive element 12. The drive element 12 is configured to drive the optical element 11 to move along a first direction F, so that the optical element 11 cuts into or moves out of an optical path. "Cut into an optical path" may be understood as that the optical element 11 is on an optical path of the optical system, and light passes through the optical element 11 and then enters the imaging lens group 20. "Move out of an optical path" may be understood as that after entering the lens assembly 100 of the camera apparatus 1000, light directly enters the imaging lens group 20 without passing through the optical element 11. In other words, the optical element 11 is not on a propagation path of the light. FIG. 1 is a schematic diagram of a state in which the optical element 11 cuts into an optical path, and FIG. 2 is a schematic diagram of a state in which the optical element 11 moves out of an optical path. The optical element 11 cuts into or moves out of the optical path in an object-side direction of the imaging lens group 20, so that zoom can be implemented and the field of view can be enlarged. The first direction F is set at an included angle with the optical axis P. Specifically, the included angle may be 90 degrees or close to 90 degrees, so that a movement direction of the optical element 11 is perpendicular to the optical axis or nearly perpendicular to the optical axis P. Compared with a conventional solution in which an optical element moves along a direction of the optical axis P to perform zoom, a zoom solution in which the optical element 11 cuts into or moves out in a direction perpendicular to the direction of the optical axis P does not affect a total track length (TTL) of the optical system in the direction of the optical axis P. This helps meet a design requirement of miniaturization of the camera apparatus.

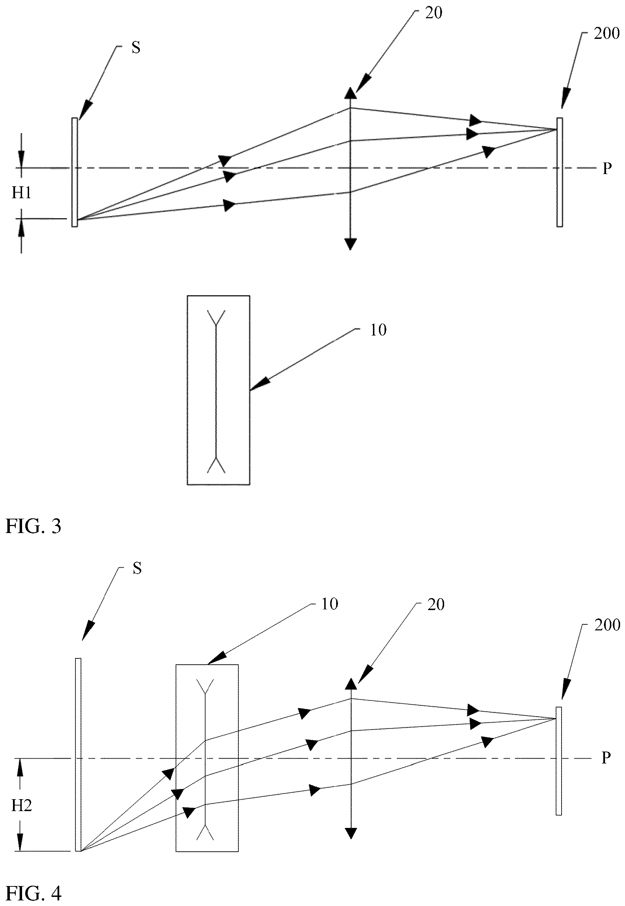

FIG. 3 and FIG. 4 are respectively an optical path diagram before the optical element 11 cuts into an optical path and an optical path diagram after the optical element 11 cuts into an optical path, and show changes of a field of view in a process of zoom by using the zoom lens group 10 in the camera apparatus provided in this application. A leftmost side is a target object S, and a rightmost side is the image sensor 200. As shown in FIG. 3, before the optical element 11 cuts into the optical path, the imaging assembly 20 is used for imaging alone. In other words, the imaging lens group 20 can clearly image the target object S on an imaging surface. Through comparison between FIG. 3 and FIG. 4, it is shown that after the optical element 11 cuts into the optical path, a height of the target object S increases, H2 is greater than H1, and a field of view increases obviously, so that light with a large field of view can be collected, and a wide-angle photographing function can be implemented.

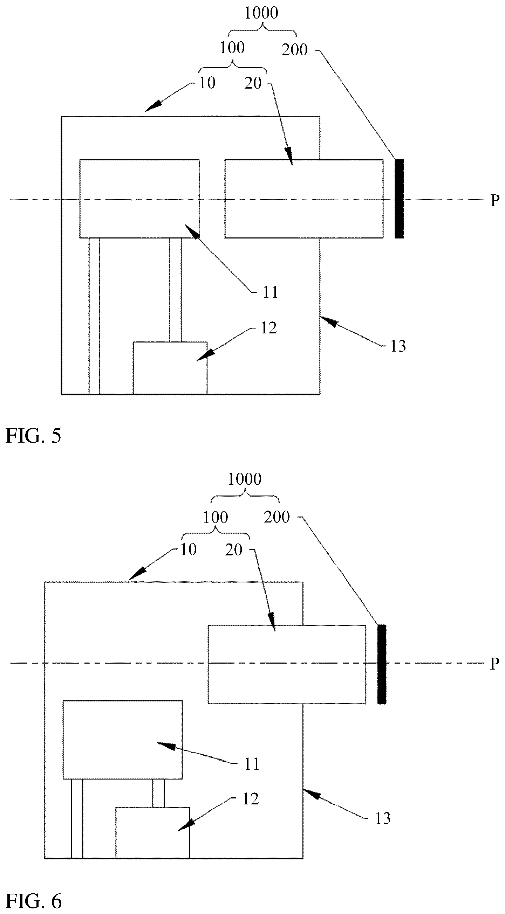

FIG. 5 and FIG. 6 are schematic diagrams of a camera apparatus 1000 according to an implementation of this application. A difference between this implementation and the implementation shown in FIG. 1 and FIG. 2 lies in that a housing 13 is added in this implementation, and a zoom lens group 10 and an imaging lens group 20 are assembled together by using the housing 13, so that a lens assembly 100 is assembled as an integral structure and has good integrity. When the lens assembly 100 is mounted to the camera apparatus 1000, the lens assembly 100 needs to be precisely aligned with the image sensor 200. This implementation helps improve alignment precision. Specifically, the zoom lens group 10 includes the housing 13, an optical element 11 and a drive element 12 mounted to the housing 13, and the imaging lens group 20 is also connected to the housing 13, so that the zoom lens group 10 and the imaging lens group 20 are assembled together by the arrangement of the housing 13. In addition, a part of the imaging lens group 20 extends into the housing 13, so that an optical path between the optical element 11 and the imaging lens group 20 is disposed inside the housing 13, and the housing 13 can have airtightness, can protect the optical path, and helps ensure stability of the optical path.

In this application, the optical element 11 cuts into or moves out of the optical path to implement zoom. In addition, by properly allocating a focal power of the optical element 11 of the zoom lens group 10, imaging of a wide-angle area can be implemented when the optical element 11 cuts into the optical path. The focal power of the optical element 11 of the zoom lens group 10 is negative. As a zoom group, the zoom lens group can change a field of view of the imaging lens group, because the zoom lens group has a function of collecting large-angle light only when the focal power of the optical element is negative, and the field of view can be enlarged. A lens group of the optical element 11 includes at least one lens, and a quantity of lenses is not limited, and may be one, two, three, or more. One lens close to a target object is a first lens. In a specific implementation, the first lens has a negative focal power, so that when the zoom lens group cuts into the optical path, a field of view of the camera apparatus can be enlarged.

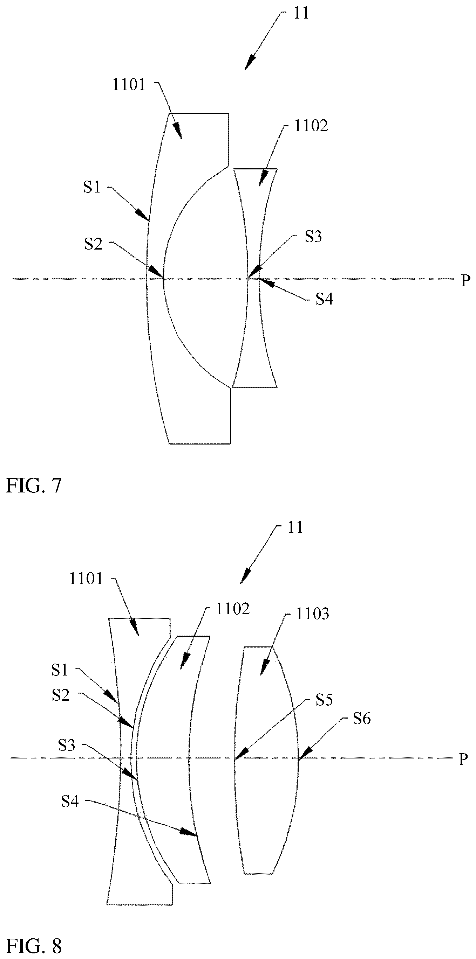

FIG. 7 and FIG. 8 show an architecture of a lens group of an optical element 11 in a zoom lens group 10 provided in two specific implementations.

As shown in FIG. 7, the optical element 11 includes a first lens 1101 and a second lens 1102 that are successively arranged along an optical axis P, and the first lens 1101 is the 1^{st} lens of the optical element 11 that is close to an object side. An object-side surface S1 of the first lens 1101 is a convex surface near the optical axis P, an image-side surface S2 of the first lens 1101 is a concave surface near the optical axis P, and a focal power of the first lens 1101 may be negative. An object-side surface S3 and an image-side surface S4 of the second lens 1102 are both concave surfaces near the optical axis, and a focal power of the second lens 1102 is negative. After being combined, the first lens 1101 and the second lens 1102 are placed on an object side of the imaging lens group, so that a focal length can be adjusted and a field of view can be enlarged. A focal power of the optical element 11 provided in this implementation is negative.

As shown in FIG. 8, the optical element 11 includes a first lens 1101, a second lens 1102, and a third lens 1103 that are successively arranged along an optical axis P, and the first lens 1101 is the 1^{st} lens of the optical element 11 that is close to an object side. An object-side surface S1 of the first lens 1101 is a concave surface near the optical axis P, an image-side surface S2 of the first lens 1101 is a concave surface near the optical axis P, and a focal power of the first lens 1101 is negative. An object-side surface S3 of the second lens 1102 is a convex surface near the optical axis, an image-side surface S4 of the second lens 1102 is a concave surface near the optical axis, and a focal power of the second lens 1102 is positive. An object-side surface S5 of the third lens 1103 is a convex surface near the optical axis, an image-side surface S6 of the third lens 1103 is a convex surface near the optical axis, and a focal power of the third lens 1103 is positive. After being combined, the first lens 1101, the second lens 1102, and the third lens 1103 are placed on an object side of the imaging lens group, so that a focal length can be adjusted and a field of view can be enlarged. A focal power of the optical element 11 provided in this implementation is negative.

Numbers of the first lens 1101 and the second lens 1102 in FIG. 8 are the same as those of the first lens and the second lens in FIG. 7, and using the same numbers only means that positions of the first lens and the second lens are the same in the two implementations. To be specific, the first lens and the second lens are in a same sequence on the optical axis, and are the 1^{st} lens and the 2^{nd} lens respectively. In the two implementations, using a same number for lenses at a same position does not mean that structural forms of the first lens and the second lens in the two implementations are the same, nor does it mean that sizes and optical parameters of the first lens and the second lens are the same.

In another possible implementation, the optical element 11 may alternatively include only one lens, and a focal power of the lens is negative. A radius range R1 of an object-side surface of the lens meets |R1| > 100 mm, and a radius range R2 of an image-side surface of the lens meets -35 mm < R2 < -15 mm.

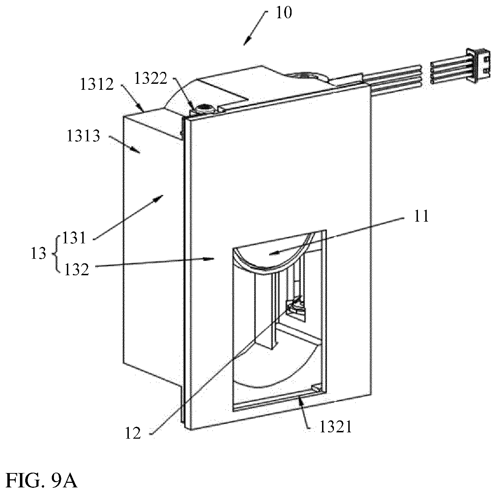

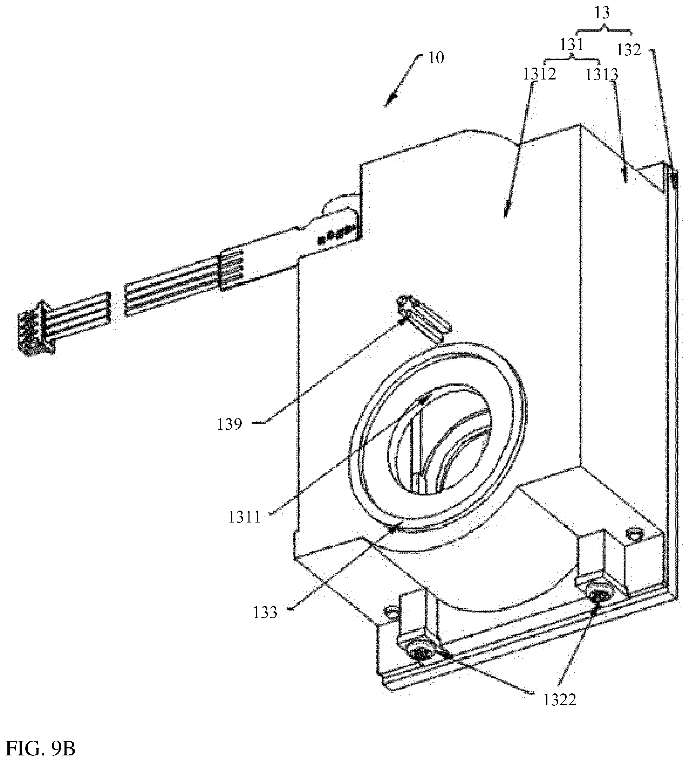

FIG. 9A and FIG. 9B are schematic three-dimensional diagrams of a zoom lens group 10 after assembly according to an implementation of this application. The zoom lens group 10 includes a housing 13, the housing 13 includes a housing body 131 and a cover plate 132, the cover plate 132 is provided with a first opening 1321, and the first opening 1321 is a light inlet. The housing body 131 includes a bottom wall 1312 and a side wall 1313 that are jointly enclosed to form an accommodation space, the bottom wall 1312 is provided with a second opening 1311, the bottom wall 1312 is connected to one end of the side wall 1313, and the other end of the side wall 1313 is an opening (this opening is blocked by the cover plate 132 in FIG. 9A). An optical element 11 and a drive element 12 may be mounted inside the housing body 131 from the opening position, and the cover plate 132 is connected to an opening position at the other end of the side wall 1313. In this application, the optical element and the drive element of the zoom lens group are assembled to the housing, so that a zoom lens becomes a modularized overall structure, and the zoom lens group can be decoupled from an imaging lens group or an optical system. In other words, the zoom lens group can be separated to be an independent apparatus. In this way, the apparatus is easy to operate in design and assembly aspects. The zoom lens group is mounted in the optical system, namely, a camera, and only the housing needs to be positioned to ensure a position relationship between an optical axis and a connection line between a center of the first opening and a center of the second opening, to ensure assembly precision. In addition, the separated zoom lens group can be matched with different types of imaging lens groups, so that the zoom lens group is widely applied.

Specifically, both the cover plate 132 and the bottom wall 1312 of the housing body 131 are in a flat plate shape, and the cover plate 132 and the bottom wall 1312 of the housing body 131 are parallel to each other and are both perpendicular to the optical axis. The cover plate 132 and the housing body 131 may be fixed by using a buckle structure, may be fixed by using glue, or may be fixed by using screws. In the embodiments shown in FIG. 9A and FIG. 9B, the cover plate 132 and the housing body 131 are fixed by using screws. Specifically, a fixing piece 1322 is protruded at an edge position of the cover plate 132. When the cover plate 132 is buckled to the housing body 131, the fixing piece 1322 is located outside the housing body 131. A fixed connection is implemented by screwing through the fixing piece 1322 and locking to the housing body 131. With reference to FIG. 9A and FIG. 9B, there may be three fixing pieces 1322 forming a triangular fixing structure.

In an extension direction of the optical axis, the first opening 1321 and the second opening 1311 are opposite to each other, and the connection line between the center of the first opening 1321 and the center of the second opening 1311 is collinear with the optical axis. A size of the first opening 1321 may be greater than a size of the second opening 1311. Because the zoom lens group 10 has a function of enlarging a field of view, the size of the first opening 1321 is set to be greater than the size of the second opening 1311, which helps match a large field of view. Certainly, the first opening 1321 and the second opening 1311 may have a same shape and size. An optical element or a transparent protective sheet, for example, protective glass, may be disposed at the first opening 1321. To ensure airtightness of the housing 13 of the zoom lens group 10, the optical element or the transparent protective sheet at the first opening 1321 and the housing 13 are fixed by sealant bonding, to form a sealing structure with a dust-proof and waterproof effect to protect the optical path from dust or water vapor in environments, thereby ensuring imaging quality.

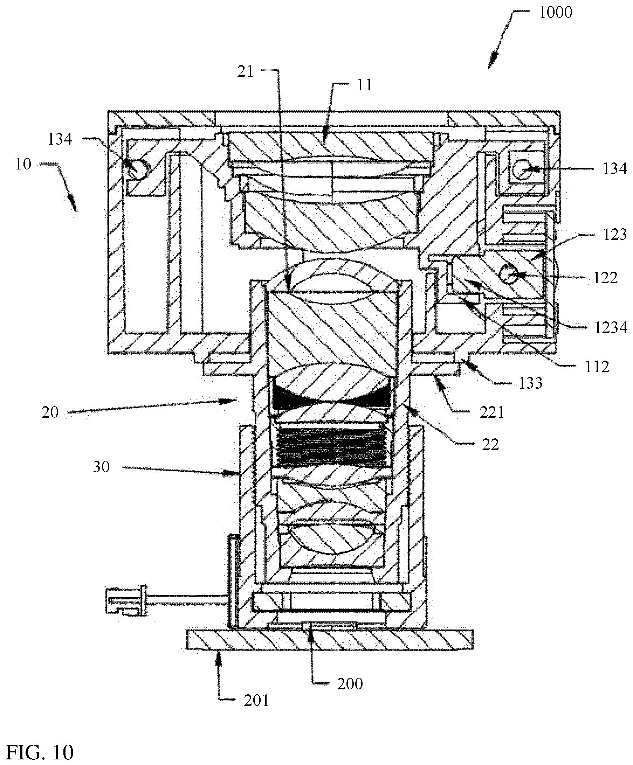

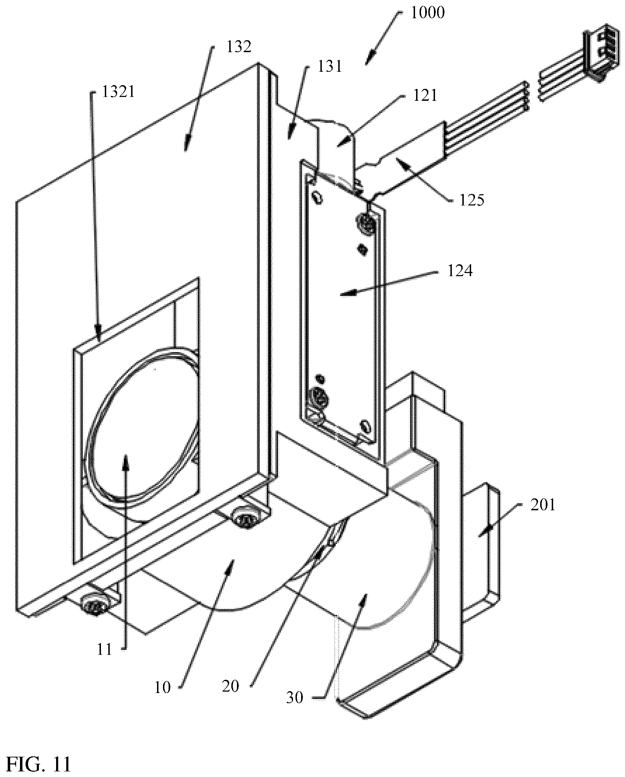

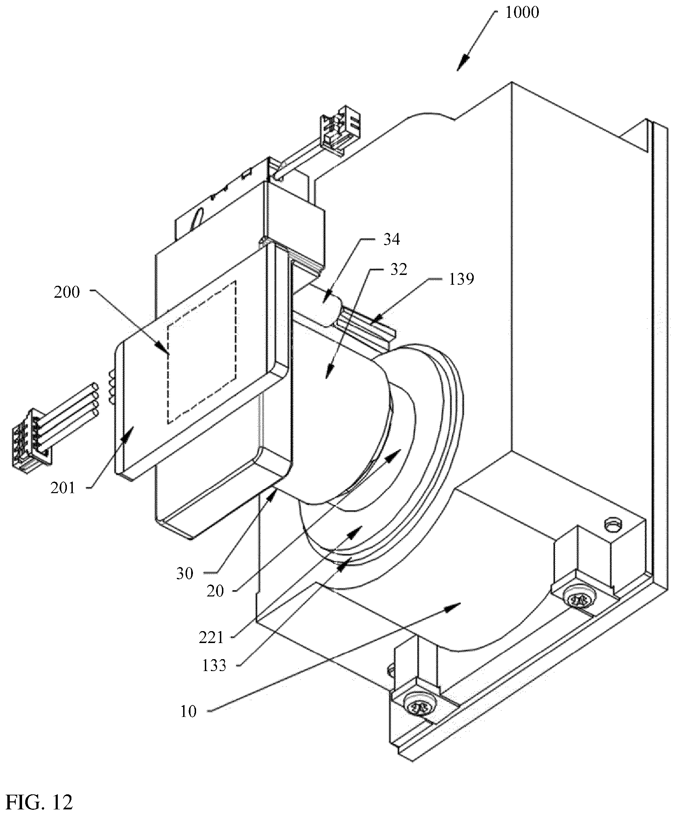

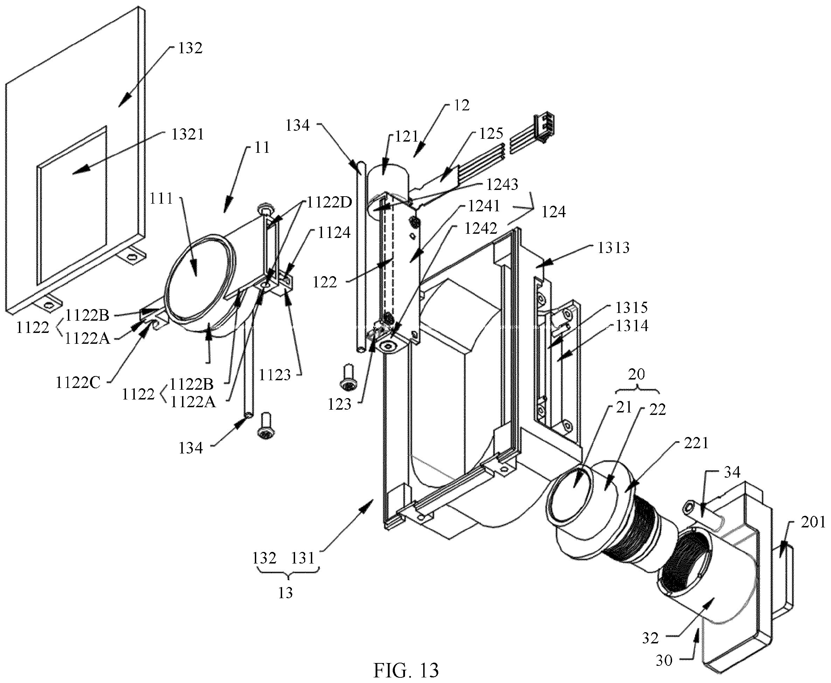

FIG. 10 is a cross-sectional view of a camera apparatus 1000 according to this application, FIG. 11 and FIG. 12 are schematic three-dimensional diagrams of a camera apparatus 1000 according to this application, and FIG. 13 is a schematic three-dimensional exploded diagram of the camera apparatus 1000 shown in FIG. 11 and FIG. 12. In this implementation, the camera apparatus 1000 is a fixed-focus camera, and a zoom lens group 10, an imaging lens group 20, and an image sensor 200 are assembled together to form a whole. The image sensor 200 is fixed on a circuit board 201. A device represented by a dashed box on the circuit board 201 shown in FIG. 12 is the image sensor 200, which is blocked by the circuit board 201 and is invisible, and is represented by a dashed line.

As shown in FIG. 11, an optical element 11 is in a state of cutting into an optical path, and the optical element 11 faces a first opening 1321 on a cover plate 132. As shown in FIG. 12, a position of a second opening is connected to the imaging lens group 20. In FIG. 12, the second opening is blocked by the imaging lens group 20 and is invisible. Referring to FIG. 13, the imaging lens group 20 includes a lens group 21 and a lens barrel 22, the lens group 21 is mounted in the lens barrel 22, a fixing plate 221 is protruded at a periphery of the lens barrel 22, and the fixing plate 221 is annular. An included angle is formed between the fixing plate 221 and a cylindrical outer surface of the lens barrel 22, and the included angle may be 90 degrees or close to 90 degrees. That is, the fixing plate 221 extends vertically outward from the outer surface of the lens barrel 20. Specifically, the fixing plate 221 is located in a middle area of a columnar body of the lens barrel 22, and a part of the columnar body of the lens barrel 22 is at two sides of the fixing plate 221. A part of the imaging lens group 20 passes through the second opening and extends into an accommodation space in a housing 13, and the lens barrel 22 is connected to the housing 13 of the zoom lens group, so that light emergent from the optical element 11 enters the imaging lens group 20 in the accommodation space. A part of the lens barrel 22 on a left side of the fixing plate 221 shown in FIG. 13 extends into the housing 13 of the zoom lens group 10, and the fixing plate 221 is fixedly connected to the housing 13. With reference to FIG. 9B, FIG. 10, and FIG. 12, a fixing portion 133 is protruded on an outer surface of the housing 13, the fixing portion 133 is annular and surrounds the second opening 1311, an outer edge of the fixing plate 221 overlaps the fixing portion 133, and the fixing plate 221 and the fixing portion 133 may be fixed by glue bonding.

Therefore, in this implementation, the housing 13 of the zoom lens group 10 and the imaging lens group 20 are fixedly connected to jointly form a fixed optical structure. This solution is applicable to a fixed-focus camera. In another implementation, the housing 13 and the imaging lens group 20 may be alternatively connected in an unfixed manner, for example, may slide relatively and rotate relatively, and a position of the zoom lens group 10 or the imaging lens group 20 may be adjusted in a manner of movement or rotation. This solution is applicable to a continuous-zoom camera.

In this application, a drive element 12 configured to drive the optical element 11 to move uses a solution in which a motor is fitted with a screw rod, or an air cylinder may be used as power to push the optical element to move. The solution in which the motor is fitted with the screw rod is described in detail as follows.

Referring to FIG. 13, FIG. 14, and FIG. 15, the drive element 12 includes a motor 121, a screw rod 122, and a fitting member 123. One end of the screw rod 122 is fixedly connected to an output shaft of the motor 121. In an operation state, the motor 121 can drive the screw rod 122 to rotate. An outer surface of the screw rod 122 is provided with a thread for threadedly connecting to the fitting member 123. The fitting member 123 is fixedly connected to the optical element 11. The fitting member 123 includes a body 1232 provided with a threaded through hole 1231 and a connection portion 1234 located at an edge position of the body 1232, and the screw rod 122 passes through the threaded through hole 1231 to implement a threaded fit between the fitting member 123 and the screw rod 122.

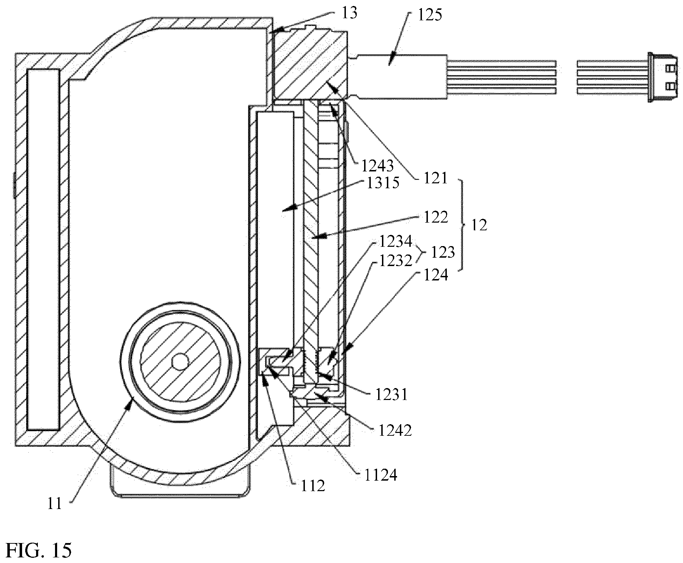

Specifically, as shown in FIG. 15, an outer surface of the lens barrel 112 is provided with a groove 1124, and the connection portion 1234 is fitted with the groove 1124, so that the lens barrel 112 is connected to the fitting member 123. In this application, the structure of the threaded through hole 1231 fitted with the screw rod 122 can ensure that the fitting member 123 slides on the screw rod 122 in a balanced manner. In an assembly process, the fitting member 123 and the screw rod 122 are first assembled as a whole, and then the connection portion 1234 of the fitting member 123 is inserted into the groove 1124 on the lens barrel 112. The fit between the connection portion 1234 and the groove 1124 may be a tight fit, which may be understood as an interference fit. A fixed connection between the connection portion 1234 and the lens barrel 112 is implemented by using a friction force between the connection portion 1234 and the lens barrel 112.

In another possible implementation, due to a tolerance in a design or assembly process, a gap may exist between the connection portion 1234 and the groove 1124, and the existence of the gap causes an unstable connection between the connection portion 1234 and the lens barrel 112, and shake occurs in a movement process. This gap may be fixed by glue filling. The gap problem may be alternatively resolved in another manner, for example, an elastic connection, which is specifically: A connection structure between the connection portion 1234 and the lens barrel 112 in the groove 1124 may be set as an elastic connection structure, for example, a spring plate is disposed at a periphery of the connection portion 1234. The connection portion 1234 abuts against an inner wall of the groove 1124 by using the spring plate, and the elastic connection structure can ensure a reliable connection between the connection portion 1234 and the lens barrel 112, thereby preventing loosening in a movement process and preventing the lens barrel 112 from shaking.

In this implementation, the motor 121 drives the screw rod 122 to rotate, and the screw rod 122 is threadedly fitted with the fitting member 123, so that the rotation of the screw rod 122 is converted into movement of the fitting member 123. A fitting structure only needs to be threadedly fitted, occupies a relatively small space, and is easy to assemble, so that mounting precision is easily ensured. This helps improve position precision of the optical element 11, and improve optical performance of a zoom lens group10.

Referring to FIG. 13, a specific structure of the optical element 11 is as follows.

The optical element 11 includes a lens group 111 and a lens barrel 112, the lens barrel 112 includes a cylindrical body 1121, a first connection portion 1122, and a second connection portion 1123. The cylindrical body 1121 is enclosed to form an accommodation space, and the lens group 111 is accommodated in the accommodation space and is fixedly connected to the lens barrel 112. There are two first connection portions 1122 located on two opposite sides of the cylindrical body 1121 respectively. The second connection portion 1123 is provided with a groove 1124, and the groove 1124 is used to fixedly connect to the fitting member 123. The second connection portion 1123 and one of the first connection portions 1122 are located on a same side of the cylindrical body 1121.

The screw rod 122 is rotatably connected to the housing 13 and extends along the first direction within the accommodation space. A guide rod 134 is further disposed in the housing 13, the guide rod 134 is fixed in the housing 13, and an extension direction of the guide rod 134 is the first direction. Specifically, a mounting hole is provided on a side wall 1313 of the housing body 131, and two ends of the guide rod 134 extend into the mounting hole to fixedly connect the guide rod 134 to the housing body 131. The guide rod 134 is a smooth cylindrical rod, and the lens barrel 112 is slidably connected to the guide rod 134. There are two guide rods 134 distributed on two sides of the optical element 11 separately, and one of the guide rods 134 and the screw rod 122 are located on a same side of the lens barrel of the optical element 11. In this application, the guide rod 134 and the screw rod 122 jointly form a movement track of the optical element 11, so that smooth movement of the optical element 11 can be ensured. The two guide rods 134 and the screw rod 122 form a triangular structure to improve stability of an assembly position of the optical element 11.

Specifically, the two first connection portions 1122 of the lens barrel 112 are fitted with the guide rod 134 to implement a sliding connection, and the first connection portion 1122 includes a fitting portion 1122A and a connection section 1122B. The connection section 1122B is connected between the fitting portion 1122A and the cylindrical body 1121. The connection section 1122B may be in a flat plate shape, or may be in any shape such as a rod shape or a strip shape. The fitting portion 1122A is provided with a through hole or through groove 1122C, and the guide rod 134 passes through the through hole or through groove 1122C and is slidably connected to the lens barrel 112. As shown in FIG. 13, the two fitting portions 1122A have different configurations, and a through groove 1122C is recessed at one end of one of the fitting portions 1122A (on a left side of the cylindrical body 1121 in FIG. 13) that is away from the connection section 1122B. The through groove 1122C may be a semi-cylindrical accommodation space. The other fitting portion 1122A (on a right side of the cylindrical body 1121 in FIG. 13) is in a frame structure and extends in the first direction (namely, the fitting portion 1122A has a strip-shaped frame structure, and a length extension direction of the fitting portion 1122A is consistent with the extension direction of the guide rod 134). The fitting portion 1122A surrounds a hollow area, the fitting portion 1122A is provided with a pair of through holes 1122D, the pair of through holes 1122D are opposite to each other along the first direction, and the guide rod 134 passes through the pair of through holes 1122D. Fitting stability of the fitting portion 1122A in a frame structure and the guide rod 134 is better, and the arrangement of the hollow area helps lighten a weight, so that the whole lens group has a light-weight advantage.

Specifically, the two connection sections 1122B located on two sides of the cylindrical body 1121 are in a flat plate shape and co-planar. The connection section 1122B connected to the frame-shaped fitting portion 1122A (on the right side of the cylindrical body 1121 in FIG. 13) is a first connection section and the other connection section (on the left side of the cylindrical body 1121 in FIG. 13) is a second connection section. In an implementation, a dimension of the first connection section extending in the first direction is greater than a dimension of the second connection section extending in the first direction, and the second connection section and a middle part of the first connection section are disposed correspondingly. Correspondingly, one of the fitting portions 1122A and a middle part of the other fitting portion 1122A are disposed correspondingly, so that the two first connection portions 1122 are fitted with the guide rod 134 to more firmly support the cylindrical body 1121.

The lens barrel 112 of the optical element 11 is of an integrally molded structure, specifically, a plastic material, and is integrally molded by using an injection molding process.

According to the claimed invention, the motor 121 is used as a power source of the drive element 12 to drive the optical element 11 to move. According to the claimed invention, the motor 121 is disposed outside the housing 13, the screw rod 122 is mounted inside the housing 13, and one end of the screw rod 122 extends out of the housing 13 to connect to the motor 121. Specifically, the housing 13 may be provided with a through hole for one end of the screw rod 122 to extend, and a size of the through hole is greater than an outer diameter of the screw rod 122, ensuring that the screw rod 122 rotates inside the through hole. The other end of the screw rod 122 is inside the housing 13 and is rotatably connected to the housing 13.

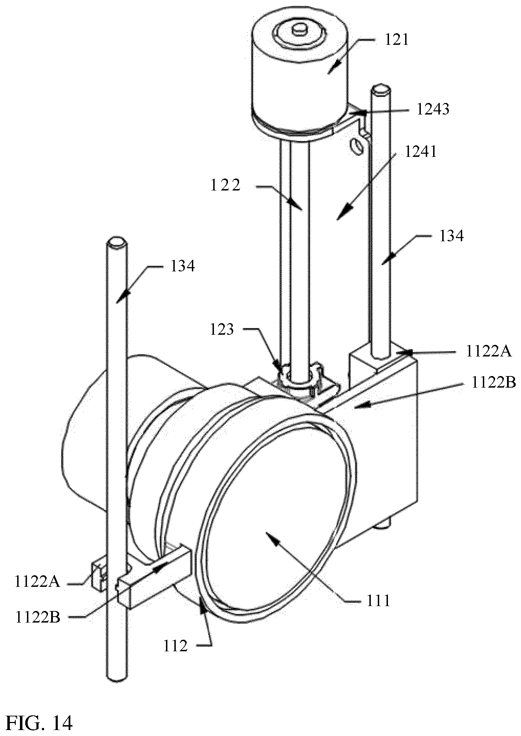

Referring to FIG. 13, FIG. 14, and FIG. 15, in an implementation, in this application, the drive element 12 is disposed outside the housing 13, and the drive element 12 is assembled to form an integral structure, and then mounted to an outer surface of the housing 13. Specifically, the drive element 12 further includes a mounting bracket 124, and the motor 121 and the screw rod 122 are mounted to the mounting bracket 124 to form a whole, and then mounted to the outer surface of the housing 13 through the mounting bracket 124. The mounting bracket 124 includes a first plate 1241, a second plate 1242, and a third plate 1243. The second plate 1242 and the third plate 1243 are opposite to each other, the first plate 1241 is connected between the second plate 1242 and the third plate 1243, the second plate 1242 and the third plate 1243 are bent and extend in a same direction from two opposite sides of the first plate 1241, and both the second plate 1242 and the third plate 1243 are perpendicular to the first plate 1241. In FIG. 13, because the screw rod 122 is blocked by the mounting bracket 124 and is invisible, to facilitate understanding of a position and a connection relationship of the screw rod 122, a part represented by a dashed line represents the screw rod 122. A position relationship between the screw rod 122 and the first plate 1241 in the mounting bracket 124 can be seen in FIG. 14. One end of the screw rod 122 is rotatably connected to the second plate 1242, and the other end of the screw rod 122 is fixedly connected to a motor shaft of the motor 121 after passing through the third plate 1243. The third plate 1243 is provided with a through hole for the screw rod 122 to pass through, and the screw rod 122 and the third plate 1243 are rotatably connected. The fitting member 123 is sleeved on the screw rod 122. The mounting bracket 124 is connected to the side wall 1313 of the housing body 131.

One side wall 1313 of the housing body 131 is provided with a mounting slot 1314, a bottom wall of the mounting slot 1314 is a part of the housing 13, and the bottom wall of the mounting slot 1314 is provided with a through groove 1315. The through groove 1315 enables an inner space of the housing 13 (namely, an inner space of the housing body 131) to communicate with an outer space of the housing. This may also be understood as that the through groove 1315 enables the inner space of the housing 13 to communicate with a space in the mounting slot 1314. The through groove 1315 is strip-shaped, and an extension direction of the through groove 1315 is the first direction.

The drive element 12 is mounted at the mounting slot 1314. Specifically, the mounting bracket 124 is mounted at the mounting slot 1314, and the mounting bracket 124 is fixedly connected to the housing body 131 by using screws. After the mounting bracket 124 is mounted to the housing body 131, the first plate 1241 is disposed opposite to the through groove 1315, and the screw rod 122 and the fitting member 123 are located in a space jointly defined by the mounting bracket 124 and the housing body 131. The space is a closed space, and external debris or dust is prevented from affecting a fitting relationship between the screw rod 122 and the fitting member 123. If debris or dust enters a fitting position between the screw rod 122 and the fitting member 123, a threaded connection between the screw rod 122 and the fitting member 123 may be unsmooth, and a sound or jam may be easily generated in a driving process.

Referring to FIG. 13 and FIG. 15, a part of the lens barrel 112 extends out of the housing body 131. Specifically, the second connection portion 1123 of the lens barrel 112 extends out of the housing body 113 from the through groove 1315, and the second connection portion 1123 is fixedly connected to the connection portion 1234 of the fitting member 123 in the space jointly defined by the mounting bracket 124 and the housing body 131.

In another implementation, such a solution may also be used: A part of the fitting member 123 extends into the housing body 131 from the through groove 1315 to fit with the groove 1124 on the lens barrel 121. Specifically, the connection portion 1234 of the fitting member 123 extends into the housing body 131, is inserted into the groove 1124 of the lens barrel 121, and is fixedly connected to the lens barrel 121.

The drive element 12 further includes a transmission line 125 electrically connected to the motor 121. One end of the transmission line 125 is electrically connected to the motor 121, and the other end thereof is disposed with a connector, configured to plug-connect to a corresponding connector on a circuit board. A control unit may be disposed on the circuit board, and the control unit includes a drive circuit and a power supply circuit.

According to the claimed invention, the motor 121 is placed outside the housing 13, so that wiring of the motor 121 is facilitated because the motor 121 needs to be electrically connected to the drive circuit and the power supply circuit. If the motor 121 is disposed in the housing 13, an electrical connection line needs to extend into the housing 13, which leads to complex wiring. Consequently, a structure of the housing 13 is also complex, not only a structure for mounting and fixing the motor 121 is required, but also a wiring hole needs to be reserved. In addition, the motor 121 heats up in an operation process, and the optical element 11 expands when heated, which affects optical performance. Placing the motor 121 outside the housing 13 can isolate the heat of the motor 121, so that the optical element 11 is protected from deformation or other performance changes caused by the heat of the motor 121.

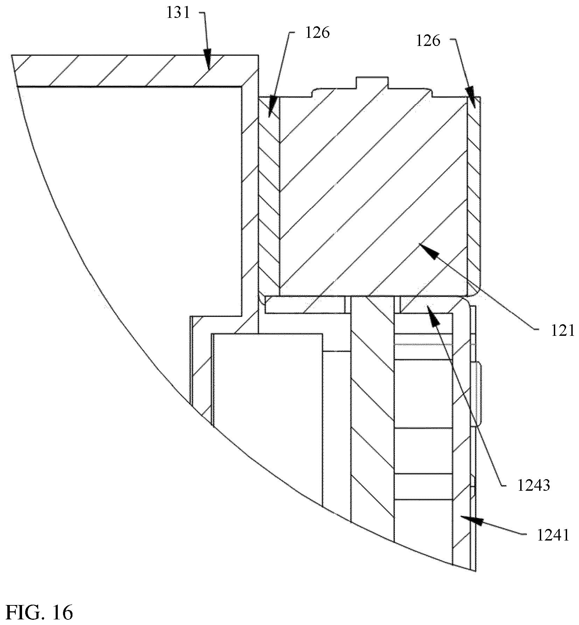

Referring to FIG. 16, the motor 121 also vibrates in the operation process. A cushioning member 126 may be disposed in a space outside the housing 13 to absorb the vibration of the motor 121. The cushioning member 126 is disposed outside the housing 13 and does not affect a spatial layout in the housing 13, thereby facilitating a miniaturization design of the zoom assembly. In the implementation shown in FIG. 16, the cushioning member 126 is disposed at a periphery of the motor 121, and the cushioning member 126 is filled between the motor 121 and an outer surface of the housing body 131. The cushioning member 126 may be alternatively disposed on one side of the motor 121 that is away from the outer surface of the housing body 131. There may be one cushioning member 126, which is disposed around an outer surface of the motor 121. The cushioning member 126 may completely surround the motor 121, or may partially surround the motor 121. A material of the cushioning member 126 may be a material having cushioning performance, such as foam or silica gel. The cushioning member 126 may be matched with a heat dissipation structure and jointly disposed at the periphery of the motor 121, because if only the cushioning member 121 is disposed around the motor 121, the cushioning member 126 may affect heat dissipation of the motor 121 and affect a service life of the motor 121. The cushioning member 126 is matched with the heat dissipation structure, so that it can be ensured that the heat of the motor 121 can be radiated in a process of providing vibration cushioning for the motor 121. The heat dissipation structure may be a metal heat conduction structure, a graphene heat dissipation structure, or the like. In this implementation, after the vibration of the motor 121 is absorbed by the cushioning member 126, a stable state of the housing 13 is ensured, so that the optical element 11 is protected from the vibration, optical performance of the optical element 11 is ensured, and an imaging effect is improved.

In a process of driving the optical element 11 to move in the housing 13 to cut into or move out of the optical path, the drive element 12 needs to limit a position of the optical element 11 to determine whether the optical element 11 is in a state of cutting into or moving out of the optical path.

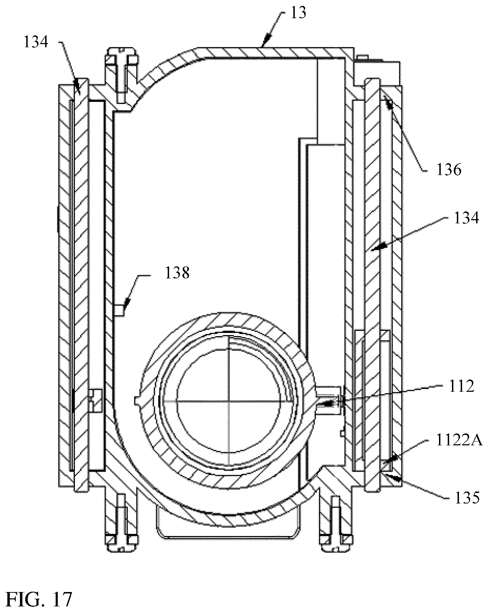

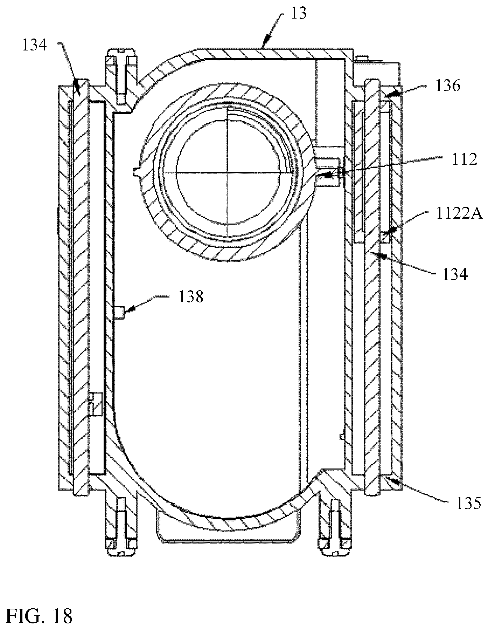

In a possible implementation, referring to FIG. 17, the housing 13 includes a first limiting wall 135 and a second limiting wall 136 that are opposite to each other, and two ends of the guide rod 134 are respectively fixed to the first limiting wall 135 and the second limiting wall 136. The zoom lens group 10 further includes a limiting slider, the limiting slider is slidably connected to the guide rod 134, and the limiting slider is fixedly connected to the lens barrel 112. With reference to FIG. 13, FIG. 17, and FIG. 18, in this implementation, the limiting slider is the fitting portion 1122A of the first connection portion 1122 and is the fitting portion 1122A in a frame structure. When the fitting portion 1122A (namely, the limiting slider) abuts against the first limiting wall 135 (namely, the position at which the fitting portion 1122A is located shown in FIG. 17), the optical element 11 cuts into the optical path, and is used to perform zoom and enlarge a field of view between an imaging lens group and a to-be-imaged object. When the fitting portion 1122A (namely, the limiting slider) abuts against the second limiting wall 136 (namely, the position at which the fitting portion 1122A is located shown in FIG. 18), the optical element moves out of the optical path.

To sum up, in this implementation, movement of the optical element 11 is limited by a limiting structure (a fitting structure of the first limiting wall 135, the second limiting wall 136, and the limiting slider (the fitting portion 1122A of the first connection portion 1122)). In this implementation, the fitting portion 1122A is fitted with the guide rod 134 to implement movement guiding of the optical element, and the limiting slider abuts against the first limiting wall 135 and the second limiting wall 136 to determine a movement position of the optical element 11. When the limiting slider abuts against the first limiting wall 135, it represents that the optical element 11 cuts into the optical path. In this case, the control unit may collect the position of the optical element 11 and send a signal to the drive circuit. The drive circuit may send an instruction to the motor 121, so that the motor 121 stops operating, and the control unit may record a position state of the optical element 11. When the limiting slider abuts against the second limiting wall 136, it represents that the optical element 11 moves out of the optical path. Similarly, the control unit may collect position information of the optical element, and the drive circuit may send an instruction to the motor 121, so that the motor 121 stops operating.

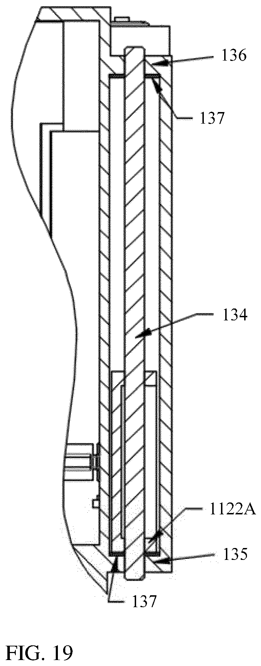

In a not-claimed possible implementation, referring to FIG. 19, a cushioning pad 137, such as a silicone pad or foam, may be disposed on surfaces on which the first limiting wall 135 and the second limiting wall 136 are in contact with the limiting slider. The cushioning pad 137 may be fixed on surfaces of the first limiting wall 135 and the second limiting wall 136, or may be fixed on a surface of the limiting slider. FIG. 19 schematically shows a structure in which the cushioning pad 137 is disposed on the surfaces of the first limiting wall 135 and the second limiting wall 136. When the limiting slider abuts against the first limiting wall 135 and the second limiting wall 136, the cushioning pad 137 absorbs an inertial force of movement of the limiting slider due to the existence of the cushioning pad 137, and when the motor 121 stops operating, the limiting slider stops moving. Because the inertial force is absorbed, the limiting slider stably stops at the first limiting wall 135 and the second limiting wall 136, and does not spring back by the inertial force. In the implementation shown in FIG. 19, it may be understood that a specific position at which the limiting slider stops is a position of the cushioning pad 137 disposed on the surfaces of the first limiting wall 135 and the second limiting wall 136. When the limiting slider stops moving, the cushioning pad 137 is sandwiched between the limiting slider and the first limiting wall 135 or the second limiting wall 136. The housing 13 and the limiting slider are both made of rigid materials, and the cushioning pad disposed on surfaces of the housing 13 and the limiting slider may be fixed by glue bonding, or the cushioning pad may be directly made on the surfaces of the first limiting wall 135 and the second limiting wall 136 or the surface of the limiting slider by using an integral molding process.

Referring to FIG. 17 and FIG. 18, in a possible implementation, the zoom lens group 10 further includes a position detection unit 138, the position detection unit 138 is electrically connected to a drive circuit, and the drive circuit may be located outside the housing 13, or may be disposed inside the housing 13. According to the claimed invention, the motor 121 is disposed outside the housing 13. Therefore, the drive circuit is also disposed outside the housing 13, the position detection unit 138 is electrically connected to the drive circuit through a wire, and the wire may extend from the outside of the housing 13 into the housing 13. Certainly, the position detection unit 138 may be alternatively electrically connected to the drive circuit in a wireless transmission manner. The drive element 12 triggers the position detection unit 138 in a process of driving the optical element 11 to move along the first direction, the position detection unit 138 sends a signal to the drive circuit, and the drive circuit is configured to drive the drive element 12 based on the signal sent by the position detection unit 138, to move the optical element 11 by a preset distance. The position detection unit 138 may be an optical coupling apparatus, for example, an optical switch. The position detection unit 138 is fixed inside the housing 13 and is located on a movement path of the optical element 11. When the optical element 11 moves to the position detection unit 138, the position detection unit 138 detects the optical element 11, so that the position detection unit 138 can be triggered to generate a position signal and send the position signal to the drive circuit. In the implementations shown in FIG. 17 and FIG. 18, the position detection unit 138 is fixed at a position between the first limiting wall 135 and the second limiting wall 136. When the position detection unit 138 is an optical coupling apparatus, as long as a light outlet of the optical coupling apparatus faces the optical element 11, the optical element 11 passes through an area corresponding to the position detection unit 138 in a movement process. In this way, the position detection unit 138 senses the optical element 11. In this application, the position detection unit may be combined with the limiting structure (namely, the fitting structure of the first limiting wall 135, the second limiting wall 136, and the limiting slider (the fitting portion 1122A of the first connection portion 1122)), to implement precise positioning of the optical element.

In a not-claimed possible implementation, the zoom lens group 10 is detachably connected to the imaging lens group 20. The detachable connection structure can decouple the zoom lens group 10 from the imaging lens group 20. In other words, the zoom lens group 10 can be matched with a plurality of different imaging lens groups. A specific detachable connection manner may be a buckle connection, a threaded connection, a connection manner of fitting a groove with a convex column, or the like. This is not specifically limited in this application.

Referring to FIG. 11, FIG. 12, and FIG. 13, the lens assembly 100 further includes a base 30 configured to fix the imaging lens group 20, the base 30 includes a fixing cylinder 32 and a positioning post 34, and the fixing cylinder 32 is configured to accommodate one end of the imaging lens group 20 that is away from the zoom lens group 10. The imaging lens group 20 is threadedly fitted with the base 30 to implement a fixed connection between the imaging lens group 20 and the base 30. A part of the lens barrel 22 of the imaging lens group 20 extends into the fixing cylinder 32 of the base 30 to be threadedly fitted, and the imaging lens group 20 is mounted to the base 30 in a rotational manner. When a position of the imaging lens group 20 on the optical axis needs to be adjusted, only the imaging lens group 20 or the base 30 needs to be rotated, so that the position of the imaging lens group 20 on the optical axis can be adjusted to implement focusing.

The positioning post 34 is located at a periphery of the fixing cylinder 32, and the positioning post 34 is configured to connect to the zoom lens group 10.

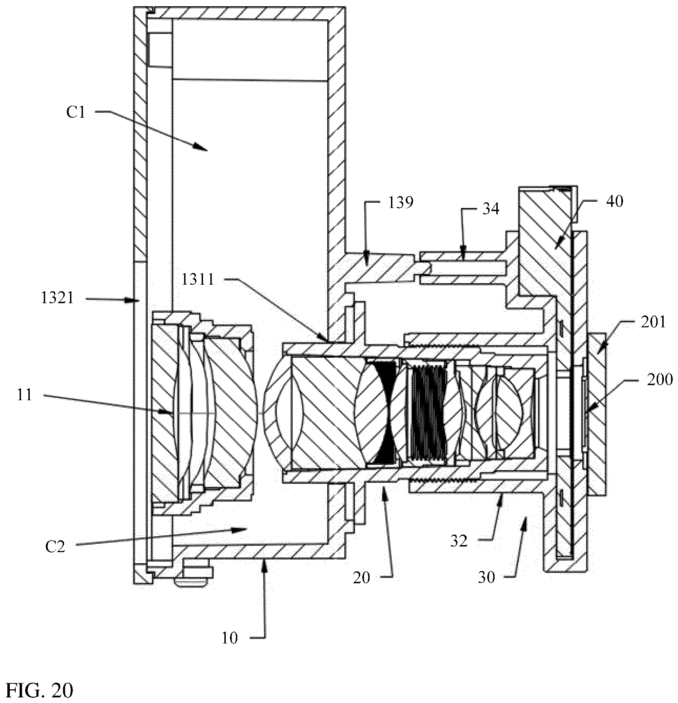

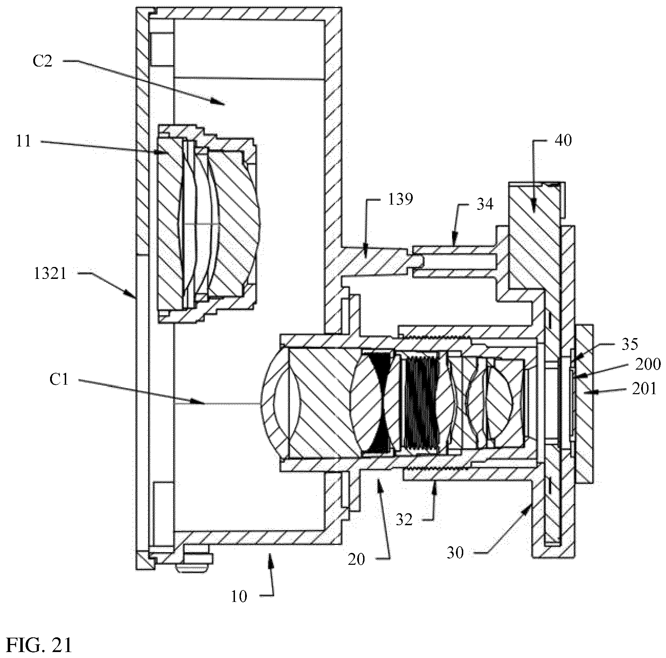

Specifically, referring to FIG. 10, a surface on one side that is of the housing 13 of the zoom lens group 10 and that faces the imaging lens group 20 is an image-side surface of the housing 13 on which the second opening 1311 is disposed, and a fixing rod 139 is protruded on the image-side surface of the housing 13. The fixing rod 139 is located at a periphery of the second opening 1311, and the fixing rod 139 is configured to connect to the base 30 for mounting the imaging lens group 20. The positioning post 34 may be of a hollow sleeve structure (as shown in FIG. 20 and FIG. 21). In another implementation, the positioning post 34 may be a solid column structure as a whole, and one end of the positioning post 34 that faces the zoom lens group 10 is provided with a fixing hole. One end of the fixing rod 139 of the zoom lens group 10 is inserted into the fixing hole of the positioning post 34.

Referring to FIG. 20 and FIG. 21, a first space C1 and a second space C2 that are in communication are arranged in parallel in the first direction in the housing 13. When the optical element 11 is in the first space C1, as the position of the optical element 11 shown in FIG. 20, the optical element 11 is located between the first opening 1321 and the second opening 1311. That is, the optical element 11 is located between the first opening 1321 and the imaging lens group 20. An optical axis of the optical element 11 is consistent with an optical axis of the imaging lens group 20, and the optical axis of the optical element 11 may coincide with the optical axis of the imaging lens group 20. Due to assembly precision and existence of an assembly tolerance, there may be a deviation between the optical axis of the optical element 11 and the optical axis of the imaging lens group 20, and the deviation does not affect imaging if the deviation is within an allowable range. When the optical element 11 is in the second space C2, as the position of the optical element 11 shown in FIG. 21, the optical element 11 moves out of the optical path.

The fixing rod 139 is located between the first space C1 and the second space C2. Alternatively, the fixing rod 139 is located in the second space C2 and at a position adjacent to the first space C1. The arrangement of the position of the fixing rod 139 can ensure balance and stability of assembly of the zoom lens group 10.

In a not-claimed possible implementation, referring to FIG. 20 and FIG. 21, an infrared cut-off filter 40 is disposed in the base 30, and the infrared cut-off filter 40 is located on an image side of the imaging lens group 20. The infrared cut-off filter 40 is located between the imaging lens group 20 and an image sensor 200. Specifically, a circuit board 201 is fixed to one side of the base 30 that is away from the zoom lens group 10, and the image sensor 200 disposed on the circuit board 201 is enclosed in an enclosed space formed by the circuit board 201 and the base 30. This may be understood as that the base 30 is provided with an accommodation space, and while the circuit board 201 is connected to a surface of the base 30, the image sensor 200 is accommodated in the accommodation space.

The infrared cut-off filter 40 includes an IR (infrared reflection) filter and an AR (anti-reflection, high-transmittance anti-reflection) filter, and the infrared cut-off filter can implement switching between the IR filter and the AR filter, to enable the imaging assembly to adapt to different application scenarios, and improve a photographing effect of a camera apparatus. When ambient light illumination is relatively strong (for example, the camera apparatus is used in daytime), a function of the IR filter in the infrared cut-off filter is used. When the ambient light illumination is relatively weak (for example, the camera apparatus is used at night), a function of the AR filter in the infrared cut-off filter is used. Specifically, a photosensitive device configured in the camera apparatus senses a change of ambient light, the photosensitive device transmits a signal of ambient light illumination to a control chip, and the control chip transmits the signal to a drive element to start operation of the drive element, so as to drive the infrared cut-off filter to switch the AR filter and the IR filter.

In the implementations shown in FIG. 10 to FIG. 21, the optical axis of the camera apparatus 1000 is straight. After entering the zoom lens group 10, light directly enters the imaging lens group 20 along the optical axis, and then enters the image sensor 200. The light is not reflected.

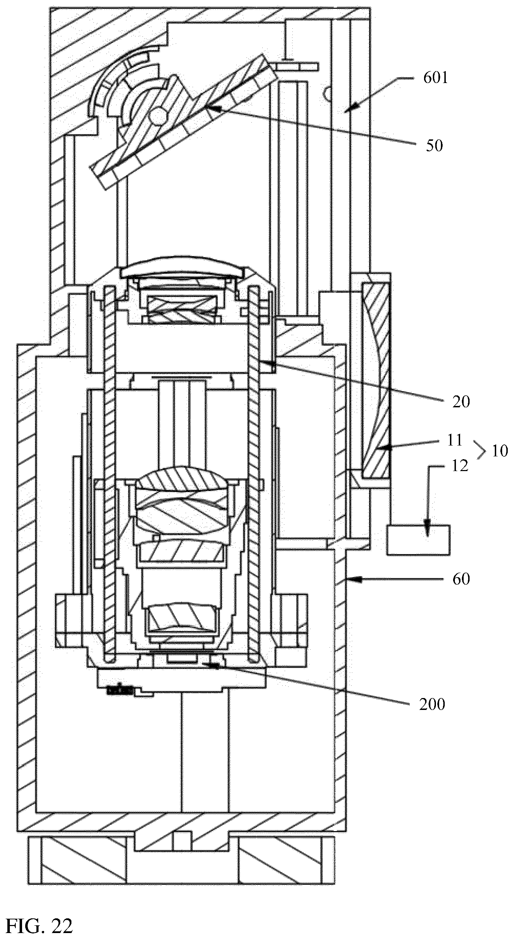

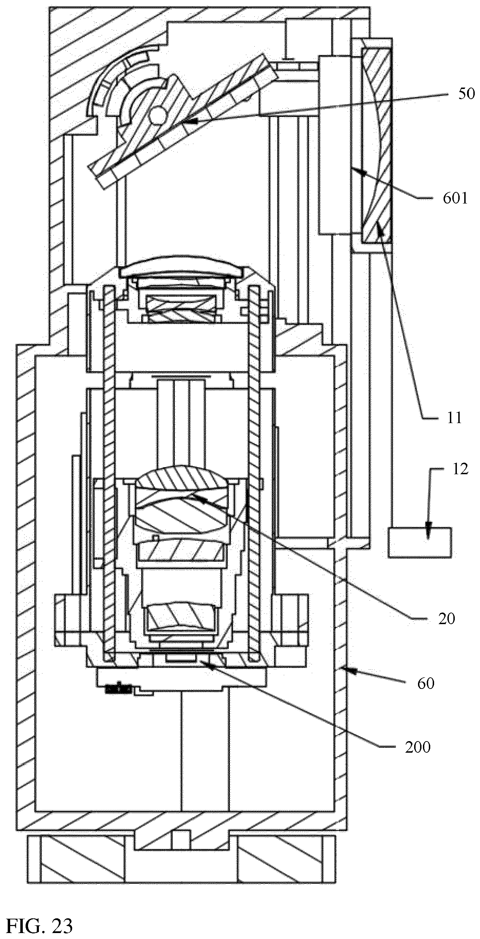

FIG. 22 and FIG. 23 are another implementation provided in this application. In this implementation, an optical axis is no longer straight, but is reflected once. Specifically, a camera apparatus 1000 includes a zoom lens group 10, an imaging lens group 20, a reflection element 50, and an image sensor 200. The image sensor 200 is located on an image side of the imaging lens group 20, the reflection element 50 is disposed on an object side of the imaging lens group 20, the reflection element 50 can rotate by a preset angle, and the preset angle may be understood as an angle specified based on a requirement of a specific photographing scene. The reflection element 50 may adjust a position of a photographed object. The reflection element 50, the imaging lens group 20, and the image sensor 200 are disposed in a housing 60 of the camera apparatus 1000. The housing 60 is provided with a light inlet 601, and the reflection element 50 can reflect light, and reflect light incident from the light inlet 601 into the imaging lens group 20.

The imaging lens group 20 and the image sensor 200 may be fixedly mounted to the housing 60. Certainly, the imaging lens group 20 may be alternatively slidably connected to the housing 60. It may be understood that a sliding rail is disposed in the housing 60, and the imaging lens group 20 is mounted on the sliding rail. A drive element drives the imaging lens group 20 to slide on the sliding rail to adjust a focal length. An extension direction of the sliding rail may be in a same direction as the optical axis. That is, zoom is performed by adjusting a position of the imaging lens group 20 on the optical axis. The reflection element 50 may be rotatably connected to the housing 60, and the drive element drives the reflection element 50 to rotate relative to the housing 60, to change an angle of the reflection element 50, so that a reflection angle of the reflection element 50 to light can be adjusted.

The zoom lens group 10 includes an optical element 11 and a drive element 12. The optical element 11 is slidably connected to the housing 60. Specifically, the optical element 11 is disposed on an outer surface of the housing 60 and slidably connected to the housing 60, and the drive element 12 is configured to drive the optical element 11 to slide relative to the housing 60, so that the optical element 11 moves to a position of the light inlet 601 or the optical element 11 moves and leaves the light inlet 601. When the optical element 11 moves to the position of the light inlet 601 (as shown in FIG. 23), the optical element 11 cuts into an optical path. Light passes through the optical element 11 and then enters the housing 60, is irradiated to the reflection element 50, and is reflected to the imaging lens group 20 by the reflection element 50. When the optical element 11 moves and leaves the light inlet 601 (as shown in FIG. 22), the optical element 11 is in a state of moving out of the optical path. In this case, light directly enters the housing 60 from the light inlet 601, and is reflected to the imaging lens group 20 by the reflection element 50.

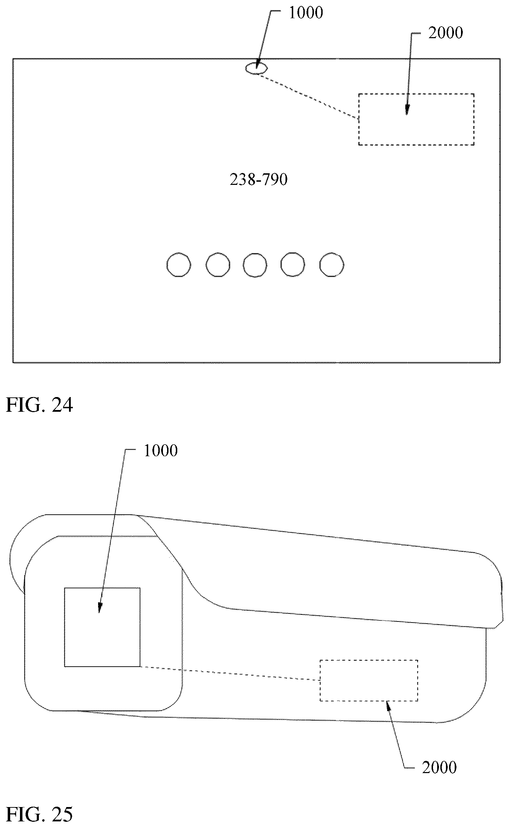

In a not-claimed possible implementation, referring to FIG. 24, a camera apparatus 1000 and a control unit 2000 are disposed in an electronic device. The camera apparatus 1000 is electrically connected to the control unit 2000. The control unit 2000 obtains image data from the camera apparatus and processes the obtained image data. The control unit 2000 may be a chip disposed on a motherboard in the electronic device. In this implementation, the electronic device is a smart screen used for a video conference. When an optical element in a zoom lens group cuts into an optical path, because the zoom lens group has functions of performing zoom and enlarging a field of view, combination of the zoom lens group and an imaging lens group can enable the camera apparatus to collect a panoramic view in a conference room, thereby implementing panoramic viewing. When the optical element moves out of the optical path, the imaging lens group performs photographing. The imaging lens group may be alternatively combined with another optical element. For example, the imaging lens group is combined with a reflector, and the reflector may rotate. In this way, the reflector can be separately positioned to a participant, to implement a close-up photographing effect. Specifically, the reflector may be understood as the reflection element 50 in the implementation shown in FIG. 22 and FIG. 23.

In a not-claimed possible implementation, referring to FIG. 25, the electronic device is a surveillance camera, which also includes a camera apparatus 1000 and a control unit 2000. The camera apparatus 1000 is electrically connected to the control unit 2000. The control unit 2000 obtains image data from the camera apparatus and processes the obtained image data. When an optical element in a zoom lens group cuts into an optical path, because the zoom lens group has functions of performing zoom and enlarging a field of view, combination of the zoom lens group and an imaging lens group enables the camera apparatus to collect a wider surveillance range without a need for a combination of a plurality of small-angle surveillance cameras. When the optical element moves out of the optical path, the imaging lens group performs photographing and distinguishes specific details of a photographed object, for example, information such as a face or a license plate.

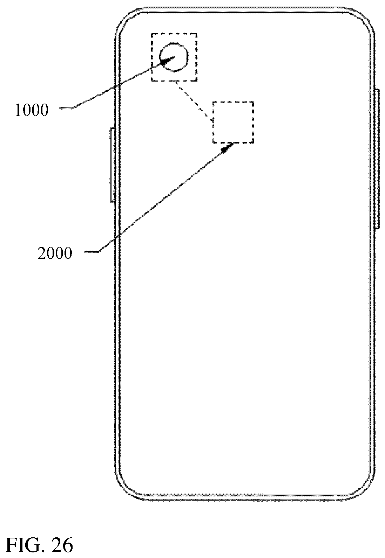

In a not-claimed possible implementation, referring to FIG. 26, the electronic device is a mobile terminal, which also includes a camera apparatus 1000 and a control unit 2000. The camera apparatus 1000 is electrically connected to the control unit 2000. The control unit 2000 obtains image data from the camera apparatus and processes the obtained image data. When an optical element in a zoom lens group cuts into an optical path, because the zoom lens group has functions of performing zoom and enlarging a field of view, combination of the zoom lens group and an imaging lens group can enable the camera apparatus to collect a wider photographing range, for example, when photographing a scene that requires a wide angle, such as a building or a bridge. When the optical element moves out of the optical path, the imaging lens group performs photographing, such as photographing a portrait.

In a not-claimed possible implementation, the electronic device may be a vehicle-mounted camera apparatus, and the vehicle-mounted camera apparatus may photograph an environment around a vehicle, obtain image data, and process the image data by using a control unit. The vehicle-mounted camera apparatus is mounted at a proper position of a vehicle body, and when the vehicle is driven into a specific environment, an image with a large field of view needs to be photographed. In this case, a drive element is controlled to operate, so that an optical element cuts into an optical path, and the vehicle-mounted camera apparatus can obtain a relatively large field of view and photograph an image with a larger range. This can provide better user experience.

The electronic device further includes an image transmission unit. The image transmission unit may perform wired transmission in the electronic device, or may perform wireless transmission, for example, a 5G transmission manner. The image transmission unit is configured to transmit the image data to a display unit. The display unit may be a display in the electronic device, or may be another display device independent of the electronic device. Specifically, using an example in which the electronic device is a smart screen or a mobile terminal, the display unit is a screen of the electronic device, and image data photographed by the camera apparatus in the electronic device is directly transmitted to the display unit by using the image transmission unit. Using an example in which the electronic device is a surveillance camera or a vehicle-mounted camera apparatus, the display unit may be a remote terminal device. For example, the surveillance camera may be communicatively connected to a remote computer screen or a mobile terminal (a mobile phone), and the vehicle-mounted camera apparatus may be communicatively connected to a vehicle-mounted display or a mobile terminal (for example, a mobile phone).

This application further provides a not-claimed zoom method, applied to a camera apparatus, and the zoom method includes the following steps:
receiving an instruction of a field of view adjustment requirement; to be specific, when a large field of view and a small field of view need to be converted into each other, a user sends an instruction to the camera apparatus; and
starting a drive element, to enable the drive element to drive an optical element based on the instruction of a field of view adjustment requirement to move along a first direction, so that the optical element cuts into or moves out of an optical path, to adjust a field of view, where the first direction is set at an included angle with an optical axis.

When the instruction of a field of view adjustment requirement is to enlarge a field of view, the drive element drives the optical element to cut into the optical path. When the instruction of a field of view adjustment requirement is to reduce a field of view, the drive element drives the optical element to move out of the optical path.

The zoom method provided in this application further includes a position detection step of the optical element, which is specifically as follows: A position detection unit detects a position of the optical element, and when the optical element triggers the position detection unit in a movement process of the optical element, the position detection unit sends a signal to a drive circuit; and the drive circuit drives the drive element based on the signal sent by the position detection unit, to move the optical element by a preset distance.

The zoom lens group, the lens assembly, the camera apparatus, the electronic device, and the zoom method provided in the embodiments of this application are described in detail above. The principles and embodiments of this application are described by using specific examples in this specification. The description of the foregoing embodiments is merely used to help understand the method and the core idea of this application. In addition, a person of ordinary skill in the art may make changes in specific embodiments and application scope based on the idea of this application. In conclusion, the content of this specification should not be construed as a limitation on this application.

## Claims

1. A camera apparatus (1000), comprising an image sensor (200), an imaging lens group (20) and a zoom lens group (10), wherein the zoom lens group (10), the imaging lens group (20), and the image sensor (200) are successively arranged along an extension direction of an optical axis (P) and the image sensor (200) is located on an image side of the imaging lens group (20);
wherein the zoom lens group (10) is located on an object side of the imaging lens group (20) of the camera apparatus (1000) along the extension direction of the optical axis (P), wherein the zoom lens group (10) comprises an optical element (11) and a drive element (12), the drive element (12) is configured to drive the optical element (11) to move along a first direction, so that the optical element (11) cuts into or moves out of an optical path to implement zoom, the first direction is set at an included angle with the optical axis (P), and when the optical element (11) cuts into the optical path, the optical element (11) is configured to enlarge a field of view;
wherein the first direction is perpendicular to the optical axis (P);
wherein the zoom lens group (10) further comprises a housing (13), the optical element (11) is accommodated inside the housing (13), and the housing (13) is configured to connect to the imaging lens group (20);
**characterised in that** the drive element (12) comprises a motor (121), a screw rod (122), and a fitting member (123), the motor (121) drives the screw rod (122) to rotate, the fitting member (123) is threadedly fitted with the screw rod (122), the fitting member (123) is fixedly connected to the optical element (11), and the screw rod (122) is rotatably connected to the housing (13) and extends along the first direction; and
**in that** the motor (121) is located outside the housing (13), and one end of the screw rod (122) extends out of the housing (13) to connect to the motor (121).

2. The camera apparatus (1000) according to claim 1, wherein a focal power of the optical element (11) is negative.

3. The camera apparatus (1000) according to claim 1, wherein the housing (13) is provided with a first opening (1321) and a second opening (1311) that are opposite to each other, when the optical element (11) moves to a position between the first opening (1321) and the second opening (1311), the optical element (11) cuts into the optical path, and the optical element (11) is located between the first opening (1321) and the imaging lens group (20).

4. The camera apparatus (1000) according to claim 3, wherein the second opening (1311) is used for a part of the imaging lens group (20) to pass through and extend into the housing (13).

5. The camera apparatus (1000) according to claim 1, wherein the zoom lens group (10) further comprises a cushioning member (126) disposed outside the housing (13) and connected to the motor (121), and the cushioning member (126) is configured to absorb vibration in an operation process of the motor (121).

6. The camera apparatus (1000) according to claim 5, wherein the zoom lens group (10) further comprises a heat dissipation structure, and the cushioning member (126) and the heat dissipation structure are jointly enclosed at a periphery of the motor (121).

7. The camera apparatus (1000) according to claim 1, wherein the optical element (11) comprises a lens barrel (112) and a lens group (111) assembled in the lens barrel (112), the lens barrel (112) is provided with a groove (1124), the fitting member (123) comprises a body (1232) and a connection portion (1234) located at an edge position of the body (1232), the body (1232) is threadedly fitted with the screw rod (122), and the connection portion (1234) is fitted with the groove (1124).

8. The camera apparatus (1000) according to claim 7, wherein glue is arranged in a gap between the connection portion (1234) and the groove (1124), and the glue fixedly connects the connection portion (1234) and the lens barrel (112).

9. The camera apparatus (1000) according to claim 7, wherein the connection portion (1234) is connected to the lens barrel (112) in the groove (1124) through an elastic connection structure.

10. The camera apparatus (1000) according to claim 1, wherein a guide rod (134) is disposed in the housing (13), the optical element (11) is slidably connected to the guide rod (134), and an extension direction of the guide rod (134) is the first direction.

11. The camera apparatus (1000) according to claim 10, wherein the optical element (11) is limited in a state of cutting into the optical path and/or in a state of moving out of the optical path through a limiting fit between the optical element (11) and the housing (13).

12. The camera apparatus (1000) according to claim 11, wherein the housing (13) comprises a first limiting wall (135) and a second limiting wall (136) that are opposite to each other, two ends of the guide rod (134) are respectively fixed to the first limiting wall (135) and the second limiting wall (136), the zoom lens group (10) further comprises a limiting slider, the limiting slider is slidably connected to the guide rod (134), the limiting slider is fixedly connected to the lens barrel (112), the limiting slider is in a limiting fit with the first limiting wall (135) and the second limiting wall (136), when the limiting slider abuts against the first limiting wall (135), the optical element (11) cuts into the optical path, and when the limiting slider abuts against the second limiting wall (136), the optical element (11) moves out of the optical path.

13. The camera apparatus (1000) according to any one of claims 1 to 12, further comprising a position detection unit (138), wherein the position detection unit (138) is electrically connected to a drive circuit, the position detection unit (138) is triggered in a process of the drive element (12) driving the optical element (11) to move along the first direction, the position detection unit (138) sends a signal to the drive circuit, and the drive circuit is configured to drive the drive element (12) based on the signal sent by the position detection unit (138), to move the optical element (11) by a preset distance.

## Patentansprüche

1. Kameravorrichtung (1000), die einen Bildsensor (200), eine Abbildungslinsengruppe (20) und eine Zoomlinsengruppe (10) umfasst, wobei die Zoomlinsengruppe (10), die Abbildungslinsengruppe (20) und der Bildsensor (200) entlang einer Erstreckungsrichtung einer optischen Achse (P) nacheinander angeordnet sind und der Bildsensor (200) auf einer Bildseite der Abbildungslinsengruppe (20) gelegen ist;
wobei die Zoomlinsengruppe (10) auf einer Objektseite der Abbildungslinsengruppe (20) der Kameravorrichtung (1000) entlang der Erstreckungsrichtung der optischen Achse (P) gelegen ist, wobei die Zoomlinsengruppe (10) ein optisches Element (11) und ein Antriebselement (12) umfasst, das Antriebselement (12) konfiguriert ist, um das optische Element (11) anzutreiben, sich entlang einer ersten Richtung zu bewegen, sodass das optische Element (11) in einen Strahlengang einschneidet oder sich aus diesem herausbewegt, um Zoom zu implementieren, die erste Richtung in einem eingeschlossenen Winkel mit der optischen Achse (P) eingestellt ist, und wenn das optische Element (11) in den Strahlengang einschneidet, das optische Element (11) konfiguriert ist, um ein Sichtfeld zu vergrößern;
wobei die erste Richtung senkrecht zu der optischen Achse (P) ist;
wobei die Zoomlinsengruppe (10) ferner ein Gehäuse (13) umfasst, das optische Element (11) innerhalb des Gehäuses (13) untergebracht ist und das Gehäuse (13) konfiguriert ist, um sich mit der Abbildungslinsengruppe (20) zu verbinden;
**dadurch gekennzeichnet, dass** das Antriebselement (12) einen Motor (121), eine Schraubenstange (122) und ein Passbauteil (123) umfasst, wobei der Motor (121) die Schraubenstange (122) antreibt, um sich zu drehen, das Passbauteil (123) mit der Schraubenstange (122) gewindemäßig angepasst ist, das Passbauteil (123) mit dem optischen Element (11) fest verbunden ist, und die Schraubenstange (122) mit dem Gehäuse (13) drehbar verbunden ist und sich entlang der ersten Richtung erstreckt; und dadurch, dass der Motor (121) außerhalb des Gehäuses (13) gelegen ist, und ein Ende der Schraubenstange (122) sich aus dem Gehäuse (13) heraus erstreckt, um sich mit dem Motor (121) zu verbinden.

2. Kameravorrichtung (1000) nach Anspruch 1, wobei eine Brechkraft des optischen Elements (11) negativ ist.

3. Kameravorrichtung (1000) nach Anspruch 1, wobei das Gehäuse (13) mit einer ersten Öffnung (1321) und einer zweiten Öffnung (1311) versehen ist, die einander gegenüberliegen, wenn sich das optische Element (11) zu einer Position zwischen der ersten Öffnung (1321) und der zweiten Öffnung (1311) bewegt, das optische Element (11) in den Strahlengang einschneidet, und das optische Element (11) zwischen der ersten Öffnung (1321) und der Abbildungslinsengruppe (20) gelegen ist.

4. Kameravorrichtung (1000) nach Anspruch 3, wobei die zweite Öffnung (1311) verwendet wird, damit ein Teil der Abbildungslinsengruppe (20) dahindurchgeht und sich in das Gehäuse (13) erstreckt.

5. Kameravorrichtung (1000) nach Anspruch 1, wobei die Zoomlinsengruppe (10) ferner ein Dämpfungsbauteil (126) umfasst, das außerhalb des Gehäuses (13) angeordnet und mit dem Motor (121) verbunden ist, und das Dämpfungsbauteil (126) konfiguriert ist, um Vibrationen in einem Betriebsprozess des Motors (121) zu absorbieren.

6. Kameravorrichtung (1000) nach Anspruch 5, wobei die Zoomlinsengruppe (10) ferner eine Wärmeableitungsstruktur umfasst, und das Dämpfungsbauteil (126) und die Wärmeableitungsstruktur an einer Peripherie des Motors (121) gemeinsam umschlossen sind.

7. Kameravorrichtung (1000) nach Anspruch 1, wobei das optische Element (11) einen Objektivtubus (112) und eine Objektivgruppe (111), die in dem Objektivtubus (112) zusammengebaut ist, umfasst, der Objektivtubus (112) mit einer Nut (1124) versehen ist, das Passbauteil (123) einen Körper (1232) und einen Verbindungsabschnitt (1234), der an einer Randposition des Körpers (1232) gelegen ist, umfasst, der Körper (1232) mit der Schraubenstange (122) gewindemäßig angepasst ist, und der Verbindungsabschnitt (1234) mit der Nut (1124) angepasst ist.

8. Kameravorrichtung (1000) nach Anspruch 7, wobei Klebstoff in einem Spalt zwischen dem Verbindungsabschnitt (1234) und der Nut (1124) eingerichtet ist, und der Klebstoff den Verbindungsabschnitt (1234) und den Objektivtubus (112) fest verbindet.

9. Kameravorrichtung (1000) nach Anspruch 7, wobei der Verbindungsabschnitt (1234) mit dem Objektivtubus (112) in der Nut (1124) durch eine elastische Verbindungsstruktur verbunden ist.

10. Kameravorrichtung (1000) nach Anspruch 1, wobei eine Führungsstange (134) in dem Gehäuse (13) angeordnet ist, das optische Element (11) mit der Führungsstange (134) gleitend verbunden ist, und eine Erstreckungsrichtung der Führungsstange (134) die erste Richtung ist.

11. Kameravorrichtung (1000) nach Anspruch 10, wobei das optische Element (11) in einem Zustand des Einschneidens in den Strahlengang und/oder in einem Zustand des Herausbewegens aus dem Strahlengang durch eine Begrenzungspassung zwischen dem optischen Element (11) und dem Gehäuse (13) begrenzt ist.

12. Kameravorrichtung (1000) nach Anspruch 11, wobei das Gehäuse (13) eine erste Begrenzungswand (135) und eine zweite Begrenzungswand (136) umfasst, die einander gegenüberliegen, zwei Enden der Führungsstange (134) jeweils an der ersten Begrenzungswand (135) und der zweiten Begrenzungswand (136) befestigt sind, die Zoomlinsengruppe (10) ferner einen Begrenzungsschieber umfasst, der Begrenzungsschieber mit der Führungsstange (134) gleitend verbunden ist, der Begrenzungsschieber mit dem Objektivtubus (112) fest verbunden ist, der Begrenzungsschieber in einer begrenzenden Passung mit der ersten Begrenzungswand (135) und der zweiten Begrenzungswand (136) steht, wenn der Begrenzungsschieber gegen die erste Begrenzungswand (135) anstößt, das optische Element (11) in den Strahlengang einschneidet, und wenn der Begrenzungsschieber gegen die zweite Begrenzungswand (136) anstößt, das optische Element (11) sich aus dem Strahlengang herausbewegt.

13. Kameravorrichtung (1000) nach einem der Ansprüche 1 bis 12, die ferner eine Positionserkennungseinheit (138) umfasst, wobei die Positionserkennungseinheit (138) mit einer Antriebsschaltung elektrisch verbunden ist, die Positionserkennungseinheit (138) in einem Prozess des Antriebselements (12), das das optische Element (11) antreibt, ausgelöst wird, sich entlang der ersten Richtung zu bewegen, die Positionserkennungseinheit (138) ein Signal an die Antriebsschaltung sendet, und die Antriebsschaltung konfiguriert ist, um das Antriebselement (12) basierend auf dem Signal, das durch die Positionserkennungseinheit (138) gesendet wird, anzutreiben, um das optische Element (11) um eine voreingestellte Distanz zu bewegen.

## Revendications

1. Appareil photographique (1000), comprenant un capteur d'image (200), un groupe d'objectif d'imagerie (20) et un groupe d'objectif zoom (10), dans lequel le groupe d'objectif zoom (10), le groupe d'objectif d'imagerie (20) et le capteur d'image (200) sont agencés successivement le long d'une direction d'extension d'un axe optique (P) et le capteur d'image (200) est situé sur un côté image du groupe d'objectif d'imagerie (20) ;
dans lequel le groupe d'objectif zoom (10) est situé sur un côté objet du groupe d'objectif d'imagerie (20) de l'appareil photographique (1000) le long de la direction d'extension de l'axe optique (P), dans lequel le groupe d'objectif zoom (10) comprend un élément optique (11) et un élément d'entraînement (12), l'élément d'entraînement (12) est conçu pour entraîner l'élément optique (11) à se déplacer le long d'une première direction, de sorte que l'élément optique (11) entre dans ou sort d'un chemin optique pour mettre en œuvre un zoom, la première direction est définie à un angle inclus avec l'axe optique (P), et lorsque l'élément optique (11) entre dans le chemin optique, l'élément optique (11) est conçu pour élargir un champ de vision ;
dans lequel la première direction est perpendiculaire à l'axe optique (P) ;
dans lequel le groupe d'objectif zoom (10) comprend en outre un boîtier (13), l'élément optique (11) est logé à l'intérieur du boîtier (13), et le boîtier (13) est conçu pour être relié au groupe d'objectif d'imagerie (20) ;
**caractérisé en ce que**
l'élément d'entraînement (12) comprend un moteur (121), une tige filetée (122) et un organe d'ajustement (123), le moteur (121) entraîne la tige filetée (122) en rotation, l'organe d'ajustement (123) est ajusté de manière filetée sur la tige filetée (122), l'organe d'ajustement (123) est relié de manière fixe à l'élément optique (11), et la tige filetée (122) est reliée de manière rotative au boîtier (13) et s'étend le long de la première direction ; et
**en ce que**
le moteur (121) est situé à l'extérieur du boîtier (13), et une extrémité de la tige filetée (122) s'étend hors du boîtier (13) pour être reliée au moteur (121).

2. Appareil photographique (1000) selon la revendication 1, dans lequel une puissance optique de l'élément optique (11) est négative.

3. Appareil photographique (1000) selon la revendication 1, dans lequel le boîtier (13) est pourvu d'une première ouverture (1321) et d'une seconde ouverture (1311) qui sont opposées l'une à l'autre, lorsque l'élément optique (11) se déplace vers une position située entre la première ouverture (1321) et la seconde ouverture (1311), l'élément optique (11) entre dans le chemin optique, et l'élément optique (11) est situé entre la première ouverture (1321) et le groupe d'objectif d'imagerie (20).

4. Appareil photographique (1000) selon la revendication 3, dans lequel la seconde ouverture (1311) est utilisée pour qu'une partie du groupe d'objectif d'imagerie (20) passe et s'étende dans le boîtier (13).

5. Appareil photographique (1000) selon la revendication 1, dans lequel le groupe d'objectif zoom (10) comprend en outre un organe d'amortissement (126) disposé à l'extérieur du boîtier (13) et relié au moteur (121), et l'organe d'amortissement (126) est conçu pour absorber des vibrations lors d'un processus de fonctionnement du moteur (121).

6. Appareil photographique (1000) selon la revendication 5, dans lequel le groupe d'objectif zoom (10) comprend en outre une structure de dissipation de chaleur, et l'organe d'amortissement (126) et la structure de dissipation de chaleur sont conjointement enfermés au niveau d'une périphérie du moteur (121).

7. Appareil photographique (1000) selon la revendication 1, dans lequel l'élément optique (11) comprend un barillet d'objectif (112) et un groupe d'objectif (111) assemblé dans le barillet d'objectif (112), le barillet d'objectif (112) est pourvu d'une rainure (1124), l'organe d'ajustement (123) comprend un corps (1232) et une partie de liaison (1234) située au niveau d'une position de bord du corps (1232), le corps (1232) est ajusté de manière filetée avec la tige filetée (122), et la partie de liaison (1234) est ajustée avec la rainure (1124).

8. Appareil photographique (1000) selon la revendication 7, dans lequel de la colle est agencée dans un espace entre la partie de liaison (1234) et la rainure (1124), et la colle relie de manière fixe la partie de liaison (1234) et le barillet d'objectif (112).

9. Appareil photographique (1000) selon la revendication 7, dans lequel la partie de liaison (1234) est reliée au barillet d'objectif (112) dans la rainure (1124) par une structure de liaison élastique.

10. Appareil photographique (1000) selon la revendication 1, dans lequel une tige de guidage (134) est disposée dans le boîtier (13), l'élément optique (11) est relié de manière coulissante à la tige de guidage (134), et une direction d'extension de la tige de guidage (134) est la première direction.

11. Appareil photographique (1000) selon la revendication 10, dans lequel l'élément optique (11) est limité dans un état d'entrée dans le chemin optique et/ou dans un état de déplacement hors du chemin optique par un ajustement de limitation entre l'élément optique (11) et le boîtier (13).

12. Appareil photographique (1000) selon la revendication 11, dans lequel le boîtier (13) comprend une première paroi de limitation (135) et une seconde paroi de limitation (136) qui sont opposées l'une à l'autre, deux extrémités de la tige de guidage (134) sont respectivement fixées à la première paroi de limitation (135) et à la seconde paroi de limitation (136), le groupe d'objectif zoom (10) comprend en outre un curseur de limitation, le curseur de limitation est relié de manière coulissante à la tige de guidage (134), le curseur de limitation est relié de manière fixe au barillet d'objectif (112), le curseur de limitation est en ajustement de limitation avec la première paroi de limitation (135) et la seconde paroi de limitation (136), lorsque le curseur de limitation vient en butée contre la première paroi de limitation (135), l'élément optique (11) entre dans le chemin optique, et lorsque le curseur de limitation vient en butée contre la seconde paroi de limitation (136), l'élément optique (11) se déplace hors du chemin optique.

13. Appareil photographique (1000) selon l'une quelconque des revendications 1 à 12, comprenant en outre une unité de détection de position (138), dans lequel l'unité de détection de position (138) est électriquement connectée à un circuit d'entraînement, l'unité de détection de position (138) est déclenchée dans un processus de l'élément d'entraînement (12) entraînant l'élément optique (11) à se déplacer le long de la première direction, l'unité de détection de position (138) envoie un signal au circuit d'entraînement, et le circuit d'entraînement est configuré pour entraîner l'élément d'entraînement (12) sur la base du signal envoyé par l'unité de détection de position (138), afin de déplacer l'élément optique (11) d'une distance prédéfinie.
